(19) Europäisches Patentamt / European Patent Office / Office européen des brevets

(11) **EP 4 369 670 A1**

(12) **EUROPEAN PATENT APPLICATION**
published in accordance with Art. 153(4) EPC

(43) Date of publication:
**15.05.2024 Bulletin 2024/20**

(21) Application number: **22836845.2**

(22) Date of filing: **04.07.2022**

(51) International Patent Classification (IPC):
**H04L 27/26** $^{(2006.01)}$

(52) Cooperative Patent Classification (CPC):
**H04L 27/26**

(86) International application number:
**PCT/CN2022/103596**

(87) International publication number:
**WO 2023/280094 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2021 CN 202110758863**

(71) Applicant: **Vivo Mobile Communication Co., Ltd.
Dongguan, Guangdong 523863 (CN)**

(72) Inventors:
• **WANG, Fanggang
  Dongguan, Guangdong 523863 (CN)**

• **SHAN, Yaru
  Dongguan, Guangdong 523863 (CN)**
• **HAO, Yaxing
  Dongguan, Guangdong 523863 (CN)**
• **WANG, Dong
  Dongguan, Guangdong 523863 (CN)**
• **LI, Xiran
  Dongguan, Guangdong 523863 (CN)**
• **YUAN, Pu
  Dongguan, Guangdong 523863 (CN)**

(74) Representative: **Petraz, Gilberto Luigi et al
GLP S.r.l.
Viale Europa Unita, 171
33100 Udine (IT)**

(54) **SIGNAL SENDING AND RECEIVING METHOD AND APPARATUS AND DEVICE**

(57) This application pertains to the field of communications technologies, and discloses a signal sending method and apparatus, a signal receiving method and apparatus, and a device. The signal sending method in embodiments of this application includes: mapping, by a transmit end, modulation symbols in delay-time domain to obtain a first delay-time domain symbol matrix; and performing, by the transmit end, first preset processing on the first delay-time domain symbol matrix to obtain a time domain sampling point, and sending the time domain sampling point after pulse shaping.

A transmit end maps modulation symbols in delay-time delay-time domain to obtain a first delay-time domain symbol matrix — 200

The transmit end performs first preset processing on the first delay-time domain symbol matrix to obtain a time domain sampling point, and sends the time domain sampling point after pulse shaping — 201

FIG. 2

**Description**

**CROSS-REFERENCE TO RELATED APPLICATIONS**

This application claims priority to Chinese Patent Application No. 2021107588635, filed on July 5, 2021 and entitled "SIGNAL SENDING METHOD AND APPARATUS, SIGNAL RECEIVING METHOD AND APPARATUS, AND DEVICE", which is incorporated herein by reference in its entirety.

**TECHNICAL FIELD**

This application pertains to the field of communications technologies, and specifically relates to a signal sending method and apparatus, a signal receiving method and apparatus, and a device.

**BACKGROUND**

A current orthogonal frequency division multiplexing (Orthogonal Frequency Division Multiplexing, OFDM) technology can effectively resist inter-symbol interference caused by a multipath channel, while achieving high-rate transmission. Low-complexity transmit signals are generated based on OFDM symbols through an inverse fast Fourier transform (Inverse Fast Fourier Transform, IFFT). However, after the IFFT, all subcarrier signals are superimposed, causing a time domain waveform to have a high peak-to-average power ratio (Peak-to-Average Power Ratio, PAPR). The high PAPR leads to reduction of power amplifier efficiency at a transmitter and signal-to-quantization-noise ratios of a digital-to-analog converter and an analog-to-digital converter. Before power efficiency in subcarrier mapping at the transmitter is improved, a discrete Fourier transform (Discrete Fourier transform, DFT) processing module is added to improve power efficiency, so that a resulting waveform behaves like a single carrier. This waveform is known as discrete Fourier transform-spread-orthogonal frequency division multiplexing (Discrete Fourier Transform-Spread-Orthogonal frequency division multiplexing, DFT-S-OFDM), and used in a long term evolution (Long Term Evolution, LTE) uplink to improve power efficiency. In a high-speed movement scenario, a severe Doppler shift destroys orthogonality between subcarriers, causing inter-carrier interference and further affecting performance of OFDM in the high-speed movement scenario. For the inter-carrier interference, the related art mainly uses carrier frequency offset estimation and compensation. However, as the speed increases continuously, a channel coherence time decreases, and frequency offset estimation and compensation become more difficult.

To resist the Doppler shift in the high-speed movement scenario, orthogonal time frequency space (Orthogonal Time Frequency Space, OTFS) has been proposed recently as a new two-dimensional multi-carrier modulation technology. Unlike OFDM, which uses time-frequency domain for symbol multiplexing, OTFS uses delay-Doppler domain for multiplexing. A transmit symbol is transformed to time-frequency domain through an inverse symplectic Fourier transform (Inverse symplectic Fourier transform, ISFFT). In delay-Doppler domain, a channel has slowly changing and sparse characteristics, which can effectively resist a time-frequency domain dual-dispersion effect brought by a fast time-varying channel. However, as a multi-carrier system, OTFS is also faced with the problem of a high PAPR. How to design the system to reduce the PAPR while ensuring performance of OTFS in the high-speed movement scenario is an urgent problem that needs to be resolved.

**SUMMARY**

Embodiments of this application provide a signal sending method and apparatus, a signal receiving method and apparatus, and a device to resolve a problem of reducing a PAPR while ensuring performance of OTFS in a high-speed movement scenario.

According to a first aspect, a signal sending method is provided. The method includes:

mapping, by a transmit end, modulation symbols in delay-time domain to obtain a first delay-time domain symbol matrix; and
performing, by the transmit end, first preset processing on the first delay-time domain symbol matrix to obtain a time domain sampling point, and sending the time domain sampling point after pulse shaping.

According to a second aspect, a signal receiving method is provided. The method includes:

performing, by a receive end, second preset processing on a received time domain signal to obtain a received signal in delay-time domain;
performing, by the receive end, channel estimation in delay-Doppler domain based on a delay-time domain pilot sequence to obtain a channel correlation parameter; and

performing, by the receive end, delay-time domain symbol detection on the received signal based on the channel correlation parameter.

According to a third aspect, a signal sending apparatus is provided. The apparatus includes:

a mapping unit, configured to map modulation symbols in delay-time domain to obtain a first delay-time domain symbol matrix; and

a first processing unit, configured to perform first preset processing on the first delay-time domain symbol matrix to obtain a time domain sampling point, and send the time domain sampling point after pulse shaping.

According to a fourth aspect, a signal receiving apparatus is provided. The apparatus includes:

a second processing unit, configured to perform second preset processing on a received time domain signal to obtain a received signal in delay-time domain;

a channel estimation unit, configured to perform channel estimation in delay-Doppler domain based on a delay-time domain pilot sequence to obtain a channel correlation parameter; and

a symbol detection unit, configured to perform delay-time domain symbol detection on the received signal based on the channel correlation parameter.

According to a fifth aspect, a terminal is provided. The terminal includes a processor, a memory, and a program or instructions stored in the memory and executable on the processor. When the program or instructions are executed by the processor, the steps of the method according to the first aspect or the second aspect are implemented.

According to a sixth aspect, a terminal is provided and includes a processor and a communications interface. The processor is configured to: map modulation symbols in delay-time domain to obtain a first delay-time domain symbol matrix; and perform first preset processing on the first delay-time domain symbol matrix to obtain a time domain sampling point, and send the time domain sampling point after pulse shaping. Alternatively, the processor is configured to: perform second preset processing on a received time domain signal to obtain a received signal in delay-time domain; perform channel estimation in delay-Doppler domain based on a delay-time domain pilot sequence to obtain a channel correlation parameter; and perform delay-time domain symbol detection on the received signal based on the channel correlation parameter.

According to a seventh aspect, a network-side device is provided. The network-side device includes a processor, a memory, and a program or instructions stored in the memory and executable on the processor. When the program or instructions are executed by the processor, the steps of the method according to the first aspect or the second aspect are implemented.

According to an eighth aspect, a network-side device is provided and includes a processor and a communications interface. The processor is configured to: map modulation symbols in delay-time domain to obtain a first delay-time domain symbol matrix; and perform first preset processing on the first delay-time domain symbol matrix to obtain a time domain sampling point, and send the time domain sampling point after pulse shaping. Alternatively, the processor is configured to: perform second preset processing on a received time domain signal to obtain a received signal in delay-time domain; perform channel estimation in delay-Doppler domain based on a delay-time domain pilot sequence to obtain a channel correlation parameter; and perform delay-time domain symbol detection on the received signal based on the channel correlation parameter.

According to a ninth aspect, a readable storage medium is provided. The readable storage medium stores a program or instructions. When the program or instructions are executed by a processor, the steps of the method according to the first aspect are implemented, or the steps of the method according to the second aspect are implemented.

According to a tenth aspect, a chip is provided. The chip includes a processor and a communications interface. The communications interface is coupled to the processor. The processor is configured to run a program or instructions to implement the method according to the first aspect or implement the method according to the second aspect.

According to an eleventh aspect, a computer program or program product is provided. The computer program or program product is stored in a non-transitory storage medium. The program or program product is executed by at least one processor to implement the steps of the method according to the first aspect or implement the steps of the method according to the second aspect.

In the embodiments of this application, the modulation symbols are mapped to delay-time domain to obtain the first delay-time domain symbol matrix, the first preset processing is performed on the first delay-time domain symbol matrix to obtain the time domain sampling point, and the time domain sampling point is sent after pulse shaping. Because single-carrier characteristics are maintained in the sending process, a PAPR is reduced while performance of OTFS in a high-speed movement scenario is ensured.

**BRIEF DESCRIPTION OF DRAWINGS**

FIG. 1 is a structural diagram of a wireless communications system to which an embodiment of this application can be applied;
FIG. 2 is a schematic flowchart of a signal sending method according to an embodiment of this application;
FIG. 3 is a schematic flowchart of modulation and demodulation according to an embodiment of this application;
FIG. 4 is a schematic diagram of a pilot pattern design in delay-time domain according to an embodiment of this application;
FIG. 5 is a schematic flowchart of a signal receiving method according to an embodiment of this application;
FIG. 6 is a schematic flowchart of signal processing according to an embodiment of this application;
FIG. 7 is a schematic structural diagram of a signal sending apparatus according to an embodiment of this application;
FIG. 8 is a schematic structural diagram of a signal receiving apparatus according to an embodiment of this application;
FIG. 9 is a schematic structural diagram of a communications device according to an embodiment of this application;
FIG. 10 is a schematic diagram of a hardware structure of a terminal for implementing an embodiment of this application; and
FIG. 11 is a schematic structural diagram of a network-side device according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

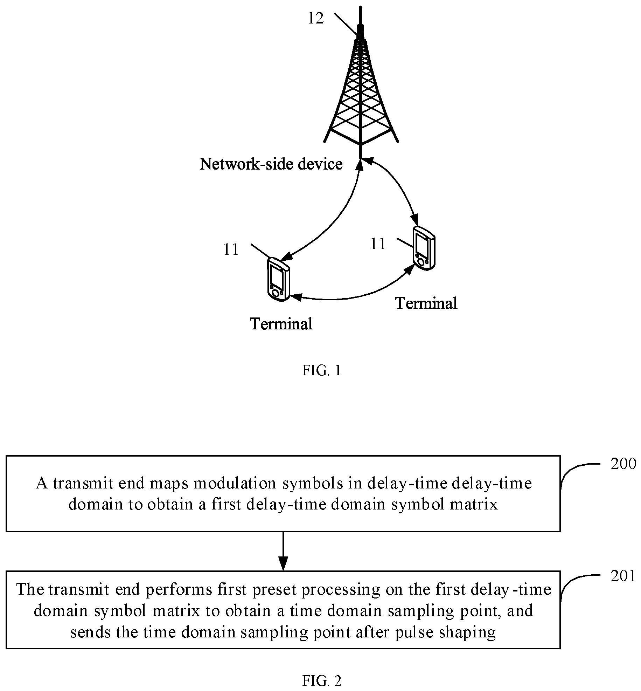

FIG. 1 is a structural diagram of a wireless communications system to which an embodiment of this application may be applied. The wireless communications system includes a terminal 11 and a network-side device 12. The terminal 11 may also be referred to as a terminal device or user terminal (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), a vehicular device (VUE), a pedestrian terminal (PUE), or a smart home (a home device having a wireless communication function, such as a refrigerator, a television, a washing machine, or furniture). The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, a game console, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art, as long as the same technical effect is achieved. The base station is not limited to specific technical terms. It should be noted that in the embodiments of this application, only a base station in an NR system is used as an example, but a specific type of the base station is not limited.

A signal sending method and apparatus and a signal receiving method and apparatus are hereinafter described in detail by using some embodiments and application scenarios thereof with reference to the accompanying drawings.

FIG. 2 is a schematic flowchart of a signal sending method according to an embodiment of this application. As shown in FIG. 2, the method includes the following steps.

Step 200: A transmit end maps modulation symbols in delay-time domain to obtain a first delay-time domain symbol matrix.

It should be noted that the transmit end may be a network-side device or a terminal.

Mapping the modulation symbols in delay-time domain means placing the modulation symbols in a delay-time domain resource grid.

Optionally, the delay-time domain resource grid is a two-dimensional planar grid with a delay dimension as rows and a time dimension as columns.

Because OTFS multiplexes symbols in delay-Doppler domain, to reduce a PAPR in a high-speed movement scenario, the transmit end places the modulation symbols in the delay-time domain resource grid, thereby obtaining the first delay-time domain symbol matrix.

In this embodiment of this application, the type of the modulation symbols is not limited. For example, the modulation symbols may be quadrature amplitude modulation (Quadrature Amplitude Modulation, QAM) symbols.

Step 201: The transmit end performs first preset processing on the first delay-time domain symbol matrix to obtain a time domain sampling point, and sends the time domain sampling point after pulse shaping.

Optionally, the first preset processing includes: transforming the delay-time domain symbol matrix to delay-Doppler domain, and then transforming the symbol matrix from delay-Doppler domain to time-frequency domain to obtain a time-frequency domain signal, which may also be referred to as a time domain sampling point or a time domain transmit signal.

In this embodiment of this application, the modulation symbols are mapped to delay-time domain to obtain the first delay-time domain symbol matrix, the first preset processing is performed on the first delay-time domain symbol matrix to obtain the time domain sampling point, and the time domain sampling point is sent after pulse shaping. Because single-carrier characteristics are maintained in the sending process, the PAPR is reduced while performance of OTFS in the high-speed movement scenario is ensured.

Optionally, the performing first preset processing on the first delay-time domain symbol matrix includes:

performing a discrete Fourier transform DFT on the first delay-time domain symbol matrix in a time dimension to obtain a first delay-Doppler domain symbol matrix;
performing Doppler dimension spread on the first delay-Doppler domain symbol matrix to obtain a second delay-Doppler domain symbol matrix;
performing an inverse discrete Fourier transform IDFT on the second delay-Doppler domain symbol matrix in a Doppler dimension to obtain a second delay-time domain symbol matrix; and
performing vectorization processing on the second delay-time domain symbol matrix to obtain the time domain sampling point, for example, making an end-to-end arrangement by column to obtain the time domain sampling point.

The time domain sampling point is sent after pulse shaping, that is, the transmit end transmits a time domain signal.

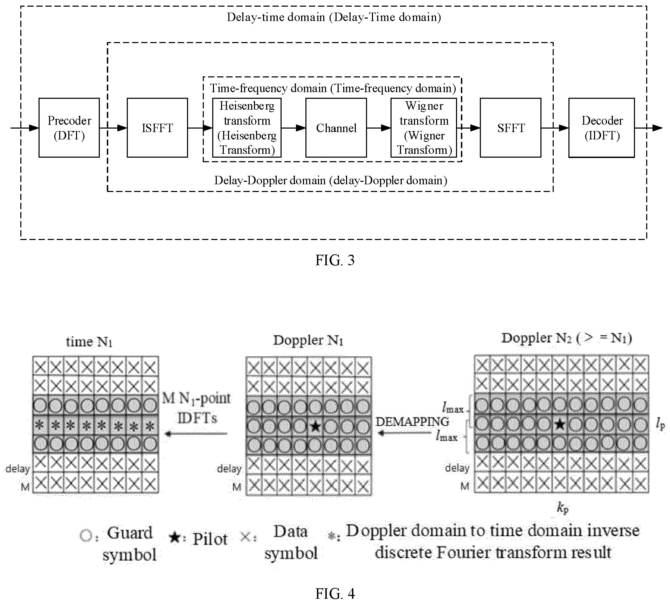

FIG. 3 is a schematic flowchart of modulation and demodulation according to an embodiment of this application. As shown in FIG. 3, to reduce a PAPR of OTFS in a high-speed movement scenario, in this embodiment of this application, modulation symbols are first mapped in delay-time domain to obtain a first delay-time domain symbol matrix; then the first delay-time domain symbol matrix is transformed to a delay-Doppler domain symbol matrix through a DFT; then the delay-Doppler domain symbol matrix is transformed to time-frequency domain through an ISSFT, and then transformed to time domain through a Heisenberg transform, that is, to a second delay-time domain symbol matrix; and finally vectorization processing is performed on the second delay-time domain symbol matrix to obtain a time domain sampling point. It should be noted that transforming the first delay-time domain symbol matrix to the delay-Doppler domain symbol matrix through the DFT, and then transforming the delay-Doppler domain symbol matrix to time-frequency domain through the ISSFT, and then to time domain through the Heisenberg transform, that is, to the second delay-time domain symbol matrix, are equivalent to transforming the first delay-time domain symbol matrix to the second delay-time domain symbol matrix through an IDFT.

Optionally, the performing first preset processing on the first delay-time domain symbol matrix to obtain a time domain sampling point, and sending the time domain sampling point after pulse shaping includes the following steps.

Step 2011: For the first delay-time domain symbol matrix with $M \times N_1$ dimensions, perform a discrete Fourier transform DFT with a length of $N_1$ row by row to obtain the first delay-Doppler domain symbol matrix with $M \times N_1$ dimensions, where M represents the number of rows in the first delay-time domain symbol matrix, and $N_1$ represents the number of columns in the first delay-time domain symbol matrix.

Optionally, the first delay-time domain symbol matrix with $M \times N_1$ dimensions is $X_{\mathrm{DT}} \in \mathbb{C}^{M \times N_1}$, where M is the number of grid points in the delay dimension, and $N_1$ is the number of grid points in the time dimension.

After M $N_1$-point DFTs are performed, the first delay-time domain symbol matrix is transformed to delay-Doppler domain to obtain the first delay-Doppler domain symbol matrix $X_{\mathrm{DDS}} \in \mathbb{C}^{M \times N_1}$ with $M \times N_1$ dimensions, that is,

$$X_{\mathrm{DDS}} = X_{\mathrm{DT}} F_{N_1} \qquad (1)$$

where $F_{N_1}$ represents an $N_1$-point Fourier transform matrix.

Step 2012: Map the first delay-Doppler domain symbol matrix with $M \times N_1$ dimensions onto a delay-Doppler domain resource grid with $M \times N_2$ dimensions to obtain the second delay-Doppler domain symbol matrix with $M \times N_2$ dimensions.

$N_2$ is the number of grid points in the Doppler dimension, and $N_2$ is an integer greater than or equal to $N_1$.

Optionally, the first delay-Doppler domain symbol matrix $X_{\mathrm{DDS}} \in \mathbb{C}^{M \times N_1}$ with $M \times N_1$ dimensions is still in delay-Doppler domain after being mapped as follows:

$$X_{\mathrm{DDL}} = X_{\mathrm{DDS}} S \qquad (2)$$

where $S \in \mathbb{C}^{N_1 \times N_2}$ is a mapping matrix, and means mapping $N_1$ numbers to $N_2$ subscripts, $N_2 \geq N_1$, and $X_{\mathrm{DDL}}$ is the second delay-Doppler domain symbol matrix with $M \times N_2$ dimensions, that is, $X_{\mathrm{DDL}} \in \mathbb{C}^{M \times N_2}$.

Step 2013: For the second delay-Doppler domain symbol matrix with $M \times N_2$ dimensions, perform an inverse discrete Fourier transform IDFT with a length of $N_2$ row by row to obtain the second delay-time domain symbol matrix with $M \times N_2$ dimensions.

Optionally, the second delay-Doppler domain symbol matrix with $M \times N_2$ dimensions is transformed to time-frequency domain through an inverse symplectic Fourier transform ISFFT to obtain a time-frequency domain symbol matrix:

$$X_{\mathrm{TF}} = F_M X_{\mathrm{DDL}} F_{N_2}^{\mathrm{H}} \qquad (3)$$

where $F_{N_2}^{\mathrm{H}}$ represents an Nz-point inverse discrete Fourier transform IDFT matrix, $F_M$ represents an M-point Fourier transform matrix, and $X_{\mathrm{TF}}$ is the time-frequency domain symbol matrix.

Then a Heisenberg transform (Heisenberg transform) is performed on the time-frequency domain symbol matrix $X_{\mathrm{TF}}$, to transform the matrix to time domain:

$$X_{\mathrm{T}} = G_{\mathrm{tx}} F_M^{\mathrm{H}} X_{\mathrm{TF}} \qquad (4)$$

where $X_{\mathrm{T}}$ is a time domain symbol matrix, $G_{\mathrm{tx}}$ represents a matrix corresponding to a shaped wave of the transmit end, a rectangular wave is used herein, that is, $G_{\mathrm{tx}} = I_M$, and $F_M^H$ represents a conjugate transpose of the M-point Fourier transform matrix, that is, an M-point IDFT matrix.

The formula (3) is substituted into the formula (4) to obtain the following formula:

$$X_{\mathrm{T}} = X_{\mathrm{DDL}} F_{N_2}^{\mathrm{H}} \qquad (5)$$

It may be understood that, according to the formula (5), the inverse discrete Fourier transform IDFT with the length of $N_2$ may be directly performed row by row on the second delay-Doppler domain symbol matrix $X_{\mathrm{DDL}} \in \mathbb{C}^{M \times N_2}$ with $M \times N_2$ dimensions, to obtain the time domain symbol matrix $X_{\mathrm{T}}$ with $M \times N_2$ dimensions. The time domain symbol matrix $X_{\mathrm{T}}$ is also the second delay-time domain symbol matrix with $M \times N_2$ dimensions.

Step 2014: Perform vectorization processing on the second delay-time domain symbol matrix with $M \times N_2$ dimensions to obtain the time domain sampling point with a length of $MN_2$, and send the time domain sampling point after pulse shaping.

Optionally, the time domain symbol matrix $X_{\mathrm{T}}$ may be expressed in a form of a vector to obtain:

$$x_{\mathrm{T}} = \mathrm{vec}(X_{\mathrm{T}}) \qquad (6)$$

$$= \mathrm{vec}(I_M X_{\mathrm{DDL}} F_{N_2}^{\mathrm{H}}) \qquad (7)$$

$$= \mathrm{vec}(I_M X_{\mathrm{DT}} (F_{N_1} S F_{N_2}^{\mathrm{H}})) \qquad (8)$$

$$= ((F_{N_1} S F_{N_2}^{\mathrm{H}})^{\mathrm{T}} \otimes I_M) \mathrm{vec}(X_{\mathrm{DT}}) \qquad (9)$$

$$= ((F_{N_1} S F_{N_2}^{\mathrm{H}})^{\mathrm{T}} \otimes I_M) x_{\mathrm{DT}} \qquad (10)$$

where vec(.) represents an operation of reading the matrix by column and converting the matrix into a vector, the formula (5) may be substituted into the formula (6) to obtain the formula (7); the formulas (1) and (2) may be substituted into the formula (7) to obtain the formula (8); the formula (9) may be obtained based on a property of a kronecker product; and (10) may be obtained by vectorizing the delay-time domain matrix.

An operation of the formula (10) may be considered as a precoding operation on the sent modulation symbol $x_{\mathrm{DT}}$. A precoding matrix is $(F_{N_1} S F_{N_2}^{\mathrm{H}})^{\mathrm{T}} \otimes I_M$.

According to the formulas (6) to (10), an expression of the time domain signal sent by the transmit end may be obtained. According to the expression, a PAPR of each frame of signal may be calculated. For example, by continuously generating 100000 frames for statistical comparison, it can be finally learned that the PAPR of the signal sending method provided in this embodiment of this application in both 4-QAM and 16-QAM is lower than that of OFDM and OTFS systems, and an effect of reducing the PAPR is achieved.

Further, through a fast time-varying channel, a noise-free time domain output may be obtained as follows:

$$y_{\mathrm{T}} = H_{\mathrm{T}} x_{\mathrm{T}} \qquad (13)$$

$$= H_{\mathrm{T}} ((F_{N_1} S F_{N_2}^{\mathrm{H}})^{\mathrm{T}} \otimes I_M) \mathrm{vec}(X_{\mathrm{DT}}) \qquad (14)$$

$$= H_{\mathrm{T}} ((F_{N_1} S F_{N_2}^{\mathrm{H}})^{\mathrm{T}} \otimes I_M) x_{\mathrm{DT}} \qquad (15)$$

where $H_T \in \mathbb{C}^{MN_2 \times MN_2}$ is a time domain equivalent channel matrix. (10) may be substituted into the formula (13) to obtain (14), and a vectorization operation may be performed on the delay-time domain symbol matrix to obtain (15).

Optionally, a delay-time domain pilot sequence is embedded in the first delay-time domain symbol matrix, and the method further includes:

demapping the second delay-Doppler domain symbol matrix to the first delay-Doppler domain symbol matrix based on a mapping relationship between $N_1$ and $N_2$; and

determining the delay-time domain pilot sequence based on an inverse discrete Fourier transform relationship between Doppler domain and time domain.

In comparison with time-frequency domain and time domain, the channel in delay-Doppler domain has properties such as a slow change and sparsity. To ensure accuracy of channel estimation in the high-speed movement scenario, in this embodiment of this application, channel estimation is performed in delay-Doppler domain. Because symbols are multiplexed in delay-time domain in this embodiment of this application, a pilot pattern in delay-time domain needs to be designed in a pilot-based channel estimation algorithm to meet a requirement of channel estimation in delay-Doppler domain.

Due to an input-output relationship of two-dimensional convolution in delay-Doppler domain, to ensure that pilot symbols are not contaminated by surrounding data symbols, guard symbols need to be inserted based on a maximum channel delay and a maximum Doppler shift. In a channel with a decimal Doppler shift, guard symbols need to be inserted in entire Doppler domain, and the delay dimension needs to reserve a maximum delay range before and after a delay in which the pilot is located. Considering the decimal Doppler shift, overheads of channel estimation in delay-Doppler domain are shown in the rightmost diagram in FIG. 4. FIG. 4 is a schematic diagram of a pilot pattern design in delay-time domain according to an embodiment of this application. In this embodiment of this application, the rightmost delay-Doppler domain in FIG. 4 is demapped to a middle region based on a Doppler single-dimensional mapping relationship between $N_1$ and $N_2$, and then the pilot pattern design in delay-time domain in the left diagram in FIG. 4 may be obtained based on an inverse discrete Fourier transform relationship between Doppler-Doppler domain and time domain.

Optionally, an expression of a pilot pattern obtained by mapping the pilot sequence onto the delay-time domain resource grid is:

$$X_{\text{DT}}\left[l,k\right]=\begin{cases} \dfrac{\sum_{k_1=0}^{N_1-1} X_{DDS}\left[l_p,k_1\right]e^{\frac{j2\pi k_1 k}{N_1}}}{N_1},l=l_p & (21a) \\ 0, l \in \{[l_p - l_{\max},l_p+l_{\max}]\setminus l_p\} & (21b) \\ d[l,k], otherwise & (21c) \end{cases}$$

where $X_{\text{DT}} \in \mathbb{C}^{M\times N_1}$ is a delay-time domain symbol matrix, $X_{\text{DT}}[l,k]$ represents a symbol in row $l$ and column $k$ in the delay-time domain resource grid, $l_p$ is a row in which the pilot sequence is located, $X_{\text{DDS}}$ is a delay-Doppler domain symbol matrix, $l_{\max}$ is a maximum channel delay, and $d[l,k]$ represents a data symbol.

The pilot sequence meets:

the pilot sequence in delay-time domain is inserted into row $l_p$ of a delay-time domain symbol set with $M \times N_1$ dimensions;
the pilot sequence is obtained through calculation according to the formula (21a); and
rows $l_p$ - $l_{\max}$ to $l_p$ - 1 adjacent to row $l_p$, and rows $l_p$ + 1 to $l_p$ + $l_{\max}$, where all symbols are zero.

In this embodiment of this application, based on a correspondence between delay-time domain and delay-Doppler domain, a pilot pattern design scheme in delay-time domain is proposed, so that channel estimation can be performed in delay-Doppler domain. This ensures accuracy of channel estimation in a channel with a decimal Doppler shift, without relying on an integer Doppler assumption, and reduces overheads of the pilot pattern.

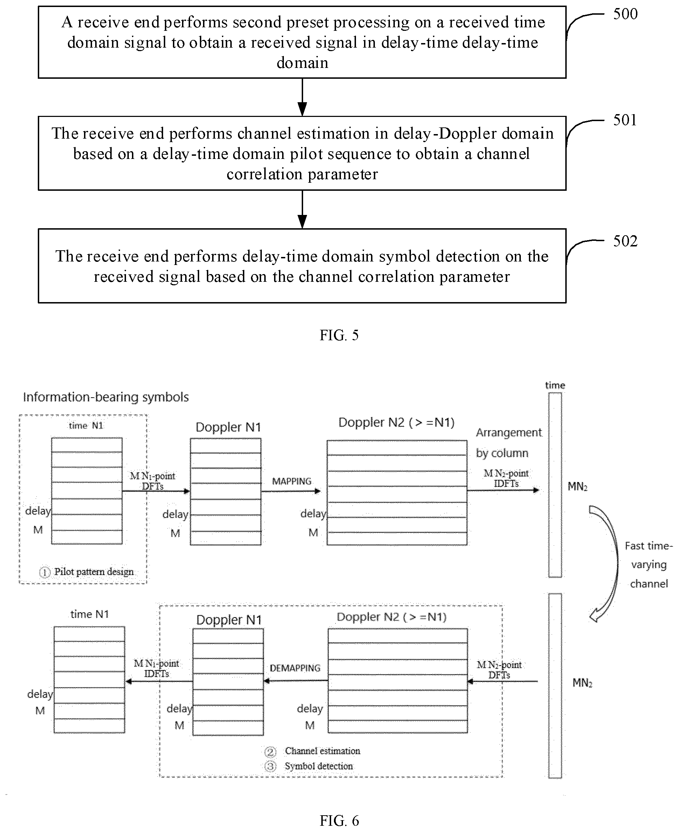

FIG. 5 is a schematic flowchart of a signal receiving method according to an embodiment of this application. As shown in FIG. 5, the method includes the following steps.

Step 500: A receive end performs second preset processing on a received time domain signal to obtain a received signal in delay-time domain.

It should be noted that the receive end may be a network-side device or a terminal.

Optionally, the receive end performs the second preset processing on the received time domain signal to convert the received time domain signal to delay-time domain.

Optionally, the second preset processing is an inverse operation of the first preset processing, and the second preset processing includes:

transforming the received time domain signal to delay-Doppler domain, and then transforming the signal from delay-Doppler domain to delay-time domain to obtain the received signal in delay-time domain.

Step 501: The receive end performs channel estimation in delay-Doppler domain based on a delay-time domain pilot sequence to obtain a channel correlation parameter.

Step 502: The receive end performs delay-time domain symbol detection on the received signal based on the channel correlation parameter.

In this embodiment of this application, the receive end performs the second preset processing on the received time domain signal to obtain the received signal in delay-time domain, then performs channel estimation in delay-Doppler domain based on the delay-time domain pilot sequence to obtain the channel correlation parameter, and further performs delay-time domain symbol detection on the received signal based on the channel correlation parameter. This reduces a PAPR, improves accuracy of channel estimation in a high-speed movement scenario, reduces overheads of channel estimation, and reduces equalization time complexity of a proposed system.

Optionally, the signal receiving method provided in this embodiment of this application further includes: obtaining the delay-time domain pilot sequence.

Optionally, the delay-time domain pilot sequence is obtained in one of the following manners:

obtaining the delay-time domain pilot sequence through calculation based on an index value or bitmap information, where the index value or bitmap information is indicated by downlink control information (Downlink Control Information, DCI) or radio resource control (Radio Resource Control, RRC) signaling, and the index value or bitmap information represents a location of a delay-Doppler domain single-point pilot pulse in a Doppler dimension of a delay-Doppler resource grid with a size of $M \times N_1$; and

obtaining the delay-time domain pilot sequence by querying a pilot index table based on a pilot sequence index, where the pilot sequence index is indicated by DCI or RRC signaling, and the pilot index table is preconfigured in a protocol or indicated by broadcast signaling.

In some optional embodiments, an index value $k_0$ or a bitmap is indicated by using DCI or RRC signaling, where the index value or bitmap represents a location (coordinates) of a delay-Doppler domain single-point pilot pulse in the Doppler dimension of the delay-Doppler resource grid with the size of $M \times N_1$. After receiving the index value $k_0$ or bitmap, user equipment (user equipment, UE) performs the following operation to obtain the pilot sequence:

$$\boldsymbol{p}_{DT} = \boldsymbol{p}_{DD} \boldsymbol{F}_{N_1}$$

where $\boldsymbol{p}_{DT}$ represents the delay-time domain pilot sequence, and $\boldsymbol{p}_{DD}$ represents a row vector with $1 \times N_1$ dimensions and meets:

$$\boldsymbol{p}_{DD}(k) = \begin{cases} 1, k = k_0 \\ 0, otherwise \end{cases}$$

In some optional embodiments, a pilot sequence index is indicated by using DCI or RRC signaling. The UE obtains the pilot sequence by querying a pilot index table, where the pilot index table is preconfigured in a protocol.

In some optional embodiments, a pilot sequence index is indicated by using DCI or RRC signaling. The UE obtains a pilot by querying a pilot index table. The pilot index table is indicated by a network-side device by using broadcast signaling, for example, a synchronization signal block (synchronization signal block, SSB), or a system information block (System Information Block type1, SIB1).

Optionally, the performing second preset processing on a received time domain signal to obtain a received signal in delay-time domain includes:

devectorizing the received time domain signal to obtain a third delay-time domain symbol matrix;
performing a discrete Fourier transform DFT on the third delay-time domain symbol matrix to obtain a third delay-Doppler domain symbol matrix;
demapping the third delay-Doppler domain symbol matrix to obtain a fourth delay-Doppler domain symbol matrix; and
performing an inverse discrete Fourier transform IDFT on the fourth delay-Doppler domain symbol matrix row by row to obtain a fourth delay-time domain symbol matrix, where the fourth delay-time domain symbol matrix is the received signal in delay-time domain.

For the second preset processing performed on the received time domain signal, refer to the demodulation procedure shown in FIG. 3.

Optionally, the performing second preset processing on a received time domain signal to obtain a received signal in delay-time domain includes the following steps.

Step 5001: Devectorize the received time domain signal with a length of $MN_2$ to obtain the third delay-time domain symbol matrix with $M \times N_2$ dimensions, where M represents the number of rows in the third delay-time domain symbol matrix, and $N_2$ represents the number of columns in the third delay-time domain symbol matrix.

Optionally, the received time domain signal with the length of $MN_2$ is devectorized and expressed in a form of a matrix to obtain:

$$Y_{\mathrm{T}} = \mathrm{devec}(y_{\mathrm{T}}) \qquad (16)$$

where devec(.) represents a devectorization operation, and $Y_T \in \mathbb{C}^{M \times N_2}$.

Step 5002: Perform a discrete Fourier transform DFT on the third delay-time domain symbol matrix with $M \times N_2$ dimensions to obtain the third delay-Doppler domain symbol matrix with $M \times N_2$ dimensions.

Optionally, the third delay-time domain symbol matrix is converted to time-frequency domain through a Wigner transform (Wigner transform),

$$Y_{\mathrm{TF}} = F_M G_{\mathrm{rx}} Y_{\mathrm{T}} \qquad (17)$$

where $G_{\mathrm{rx}}$ represents a matrix corresponding to a received waveform, and a rectangular wave is used herein, that is, $G_{\mathrm{rx}} = I_M$.

Then the signal is converted to delay-Doppler domain through an SFFT to obtain the third delay-Doppler domain symbol matrix $Y_{\mathrm{DDL}}$ with $M \times N_2$ dimensions.

$$Y_{\mathrm{DDL}} = F_M^{\mathrm{H}} Y_{\mathrm{TF}} F_{N_2} \qquad (18)$$

where $F_M{}^H$ represents a conjugate transpose of an M-point Fourier transform matrix, that is, an M-point IDFT matrix, and $F_{N_2}$ represents an Nz-point discrete Fourier transform DFT matrix.

The formula (17) may be substituted into the formula (18) to obtain $Y_{DDL} = Y_T F_{N_2}$, that is, a discrete Fourier transform DFT is performed on the third delay-time domain symbol matrix $Y_T$ with $M \times N_2$ dimensions to obtain the third delay-Doppler domain symbol matrix with $M \times N_2$ dimensions.

Step 5003: Demap the third delay-Doppler domain symbol matrix with $M \times N_2$ dimensions to obtain the fourth delay-Doppler domain symbol matrix with $M \times N_1$ dimensions.

Through demapping, a received signal in delay-Doppler domain is converted to small-range delay-Doppler domain:

$$Y_{\mathrm{DDS}} = Y_{\mathrm{DDL}} S^{\dagger} \qquad (19)$$

where $S^{\dagger}$ is a demapping matrix, and $N_2 \geq N_1$.

Step 5004: Perform an inverse discrete Fourier transform IDFT on the fourth delay-Doppler domain symbol matrix with $M \times N_1$ dimensions row by row to obtain the fourth delay-time domain symbol matrix with $M \times N_1$ dimensions, where the fourth delay-time domain symbol matrix with $M \times N_1$ dimensions is the received signal in delay-time domain, where
$N_1$ is the number of columns in the fourth delay-Doppler domain symbol matrix, and $N_1$ is an integer less than or equal to $N_2$.

Finally, through the inverse discrete Fourier transform, the fourth delay-Doppler domain symbol matrix with $M \times N_1$ dimensions is converted to delay-time domain:

$$Y_{\mathrm{DT}} = Y_{\mathrm{DDS}} F_{N_1}^{\mathrm{H}} \qquad (20)$$

The discrete Fourier matrix is defined as follows:

$$\mathbf{F_N} = \begin{bmatrix} 1 & 1 & 1 & ... & 1 \\ 1 & w^{-1} & w^{-2} & ... & w^{-(N-1)} \\ 1 & w^{-2} & w^{-4} & ... & w^{-2(N-1)} \\ ... & ... & ... & ... & ... \\ 1 & w^{-(N-1)} & w^{-2(N-1)} & ... & w^{-(N-1)^2} \end{bmatrix}$$

where $w = e^{j\frac{2\pi}{N}}$. Left multiplication and right multiplication of the matrix by $F_N$ are equivalent to performing a discrete Fourier transform on columns and rows of the matrix.

Optionally, the performing channel estimation in delay-Doppler domain based on a delay-time domain pilot sequence to obtain a channel correlation parameter includes the following steps.

Step 5011: Calculate, in delay-Doppler domain, an impulse response of the delay-time domain pilot sequence in a detection region.

The detection region is a region in which a pilot and its guard space are located, such as a region in which asterisks and circles are located in FIG. 4.

A delay-time domain pilot sequence at an origin is used as an example. A point-to-point correspondence in delay-Doppler domain is as follows:

$$Y_{\mathrm{DDL}}[l,k] = \sum_{i=1}^{N} \sum_{l'=0}^{M-1} \sum_{k'=0}^{N-1} \left[ \sum_{p=1}^{P} h_p \delta((l-l')_M - l_{\tau_p}) e^{j\phi_p} \times e^{j2\pi(k_{v_p} + \kappa_{v_p}) \frac{M(i-1)+N_{\mathrm{cp}} - l_{\tau_p} + l}{(M+N_{cp})N}} \right]$$

$$\times X_{\mathrm{DDL}}[l',k'] e^{-j2\pi \frac{(i-1)(k-k')}{N}} \tag{22}$$

$$= \sum_{l'=0}^{M-1} \sum_{k'=0}^{N-1} X_{\mathrm{DDL}}[l',k'] \Lambda_l[(l-l')_M, (k-k')_N] \tag{23}$$

where $P$ represents the total number of channel taps, $h_p$, $l_{\tau_p}$, $k_{v_p}$, and $\kappa_{v_p}$ respectively represent a channel gain of tap $p$, a delay of tap $p$, an integer Doppler of tap $p$, and a decimal Doppler of tap $p$, $Y_{\mathrm{DDL}}[l,k]$ is a symbol in row $l$ and column $k$ of the delay-Doppler domain symbol matrix, $l'$ is a delay subscript of a DDL domain symbol, $k'$ is a Doppler shift subscript of the DDL domain symbol, $\phi_p$ is a phase of a channel coefficient of path $p$, and $N_{\mathrm{cp}}$ is a length of a cyclic prefix;

$$\Lambda_l[(l-l')_M, (k-k')_N] \triangleq \sum_{p=1}^{P} h_p \, \delta((l-l')_M - l_{\tau_p}) e^{j\phi_p} \psi_p[l]$$

$$\times \gamma_N((k_{v_p} + \kappa_{v_p} - (k-k'))_N) \tag{24}$$

$$\gamma_N(x) \triangleq \sum_{i=1}^{N} e^{j2\pi(i-1)\frac{x}{N}} \tag{25}$$

$$= \frac{\sin(\pi x)}{\sin(\pi \frac{x}{N})} e^{j\pi \frac{x(N-1)}{N}} \tag{26}$$

$$\psi_p[l] \triangleq e^{j2\pi(k_{v_p} + \kappa_{v_p}) \frac{-l_{\tau_p} + l}{MN}} \tag{27}$$

Because a maximum channel delay has an upper limit, assuming that the pilot is placed at the origin, an impulse response of a delay-Doppler domain pilot sequence may be expressed as follows:

$$\tilde{H}_{i,j}^{\mathrm{DDL}}[l,k] = \sum_{p=1}^{P} e^{j\phi_p}\, \psi_p[l]h_p\delta((l-i)_M - l_{\tau_p})\gamma_N((k_{\nu_p} + \kappa_{\nu_p} - (k-j))_N) \qquad (28)$$

where $i$ is a subscript of the pilot in a delay dimension, $j$ is a subscript of the pilot in a Doppler dimension, and $\psi_p$ is a frequency offset corresponding to the impulse response of the pilot in path $p$ of the channel.

Step 5012: Perform correlation calculation on the impulse response and a Doppler function to obtain a first correlation function.

Optionally, according to the formulas (23) and (24), by performing correlation calculation on the impulse response of the pilot sequence in the detection region and the function $\gamma_N^*((k'-(k+\kappa))_N)$ about Doppler, the following first correlation function can be obtained:

$$R_{H_l,\gamma}(k+\kappa) = \frac{1}{N^2}\sum_{k'=0}^{N-1}\tilde{H}_{l,j}^{\mathrm{DDL}}[l,k']\gamma_N^*((k'-(k+\kappa))_N) \qquad (29)$$

Step 5013: Perform threshold detection on an amplitude of the first correlation function to obtain a threshold detection result.

Optionally, threshold detection is performed according to the formula (29) to obtain the threshold detection result.

Step 5014: Perform channel parameter estimation based on the threshold detection result to obtain the channel correlation parameter.

Based on the threshold detection result, the channel correlation parameter is estimated by using the following formulas:

$$
\begin{cases}
\hat{k}_{\nu_{\hat{p}}} + \hat{\kappa}_{\nu_{\hat{p}}} = k + \kappa & (30a) \\[2ex]
\hat{l}_{\tau_{\hat{p}}} = l & (30b) \\[2ex]
\hat{h}_{\hat{p}} = |R_{H_l,\gamma}(\hat{k}_{\nu_{\hat{p}}} + \hat{\kappa}_{\nu_{\hat{p}}})| & (30c) \\[2ex]
\hat{\psi}_{\hat{p}} = e^{j2\pi(\hat{k}_{\nu_{\hat{p}}} + \hat{\kappa}_{\nu_{\hat{p}}})\frac{-l_{\tau_{\hat{p}}}}{(MN)}} & (30d) \\[2ex]
e^{j\hat{\phi}_{\hat{p}}} = \dfrac{R_{H_l,\gamma}(\hat{k}_{\nu_{\hat{p}}} + \hat{\kappa}_{\nu_{\hat{p}}})}{|R_{H_l,\gamma}(\hat{k}_{\nu_{\hat{p}}} + \hat{\kappa}_{\nu_{\hat{p}}})|}\hat{\psi}_{\hat{p}}^{-1} & (30e)
\end{cases}
$$

where $\hat{\psi}_{\hat{p}}$ represents an additional phase rotation of path $p$ in addition to the phase corresponding to the channel coefficient, and $e^{j\hat{\phi}_{\hat{p}}}$ represents a phase rotation corresponding to path $p$.

It should be noted that related art 1: A channel estimation algorithm based on an embedded pilot performs threshold detection on an amplitude of a received signal in a detection region at a receive end, and estimates a corresponding channel parameter based on a location and a corresponding value of a pilot at a transmit/receive end. This method uses a channel estimation result at an integer position to fit impact of a decimal Doppler, and has very poor performance in a high-speed channel with a decimal Doppler shift. Related art 2: A channel estimation algorithm based on a correlation function can resolve channel estimation under a decimal Doppler shift, but requires a single frame to transmit a pilot separately and needs to assume that a channel for sending data in a next frame is the same as a channel through which the pilot passes. Spectral efficiency is low and an assumption in a high-speed movement scenario is not true, resulting in low feasibility. The channel estimation method provided in this embodiment of this application reduces overheads of channel estimation while ensuring accuracy based on the correlation function. While a pilot is embedded in each frame, a data symbol is placed without assuming a channel of the frame in which the pilot is located and a channel corresponding to the frame for transmitting data in a next frame. This embodiment of this application improves practicality and accuracy of channel estimation in the high-speed movement scenario.

In some optional embodiments, the performing delay-time domain symbol detection on the received signal based on the channel correlation parameter includes:

obtaining a delay-Doppler domain symbol estimation result based on a linear minimum mean square error (Minimum Mean Square Error, MMSE) equalization algorithm, the received signal, and an input-output relationship in delay-Doppler domain; and

devectorizing and demapping the delay-Doppler domain symbol estimation result to obtain a delay-time domain symbol estimation result.

According to the formula (5), the following formula may be obtained:

$$\boldsymbol{x}_{\mathrm{T}} = (\boldsymbol{F}_{N_2}^{\mathrm{H}} \otimes \boldsymbol{I}_M)\boldsymbol{x}_{\mathrm{DDL}} \qquad (31)$$

According to the formulas (17) and (18), the following formula may be obtained:

$$\boldsymbol{Y}_{\mathrm{DDL}} = \boldsymbol{Y}_{\mathrm{T}}\boldsymbol{F}_{N_2} \qquad (32)$$

Further vectorization may be performed to obtain the following formulas:

$$\boldsymbol{y}_{\mathrm{DDL}} = (\boldsymbol{F}_{N_2} \otimes \boldsymbol{I}_M)\boldsymbol{y}_{\mathrm{T}} \qquad (33)$$

$$= (\boldsymbol{F}_{N_2} \otimes \boldsymbol{I}_M)\boldsymbol{H}_{\mathrm{T}}\boldsymbol{x}_{\mathrm{T}} \qquad (34)$$

$$= (\boldsymbol{F}_{N_2} \otimes \boldsymbol{I}_M)\boldsymbol{H}_{\mathrm{T}}(\boldsymbol{F}_{N_2}^{\mathrm{H}} \otimes \boldsymbol{I}_M)\boldsymbol{x}_{\mathrm{DDL}} \qquad (35)$$

$$= \boldsymbol{H}_{\mathrm{DD}}\boldsymbol{x}_{\mathrm{DDL}} \qquad (36)$$

Based on properties of a kronecker product, the formula (33) may be obtained; according to the formula (13), the formula (34) may be obtained; by substituting the formula (31) into the formula (34), the formula (35) may be obtained; and assuming $\boldsymbol{H}_{DD} = (\boldsymbol{F}_{N_2} \otimes \boldsymbol{I}_M)\boldsymbol{H}_{\mathrm{T}}(\boldsymbol{F}_{N_2}^{\mathrm{H}} \otimes \boldsymbol{I}_M)$, the formula (36) may be obtained. Based on the input-output relationship in delay-Doppler, a solution of the MMSE may be obtained as follows:

$$\hat{x}_{\mathrm{DDL}} = (H_{\mathrm{DD}}^H H_{\mathrm{DD}} + \sigma^2 I_{MN_2})^{-1} y_{\mathrm{DDL}} \qquad (37)$$

where $\sigma^2$ is a variance of white noise.

Further devectorization is performed to obtain the following formula:

$$\hat{X}_{\mathrm{DDL}} = \mathrm{devec}(\hat{x}_{\mathrm{DDL}}) \qquad (38)$$

Demapping is performed to obtain the following formula:

$$\hat{X}_{\mathrm{DDS}} = \hat{X}_{\mathrm{DDL}} S^{\dagger} \qquad (39)$$

After a transform to delay-time domain, the following delay-time domain symbol estimation result is obtained:

$$\hat{X}_{\mathrm{DT}} = \hat{X}_{\mathrm{DDS}} F_{N_1}^{H} \qquad (40)$$

Then the delay-time domain symbol of the transmit end is estimated.

Because the formula (37) involves an operation of inverting a large matrix, a complexity order is $O((MN_2)^3)$ in

this system, and an operation time is long in an actual system. Therefore, a low-complexity symbol detection algorithm is required.

The following provides a symbol detection algorithm based on an MP algorithm in delay-time domain.

In some optional embodiments, the performing delay-time domain symbol detection on the received signal based on the channel correlation parameter includes the following steps.

Step 5021: Obtain a point-to-point input-output relationship in delay-time domain based on an input-output relationship in delay-time domain.

Point-to-point is discrete sample point to discrete sample point.

Step 5022: Calculate, based on Gaussian approximation for an interference item, first information transferred by a factor node in delay-time domain to a variable node in delay-time domain, where the first information includes a mean and variance of Gaussian variables.

The factor node includes a part of receiving sampling points y. Therefore, the factor node can also be referred to as an observation node. The variable node includes a part of sending sampling points x.

Step 5023: Calculate second information transferred by the variable node to the factor node, where the second information includes a symbol probability mass of the variable node.

Step 5024: Perform damping control on a symbol probability mass calculated in a current iteration and a result of a previous iteration.

Step 5025: In a case that an iteration stop condition is met, stop the iteration, and perform symbol detection on the variable node; or in a case that an iteration stop condition is not met, continue the iteration.

To be specific, the factor node outputs "the mean and variance" as an input of the variable node, the variable node outputs "the symbol probability mass" as an input of the observation node, and the cycle is repeated, until values of "the mean and variance" or "the symbol probability mass" meet the iteration stop condition, and then the process jumps out of the cycle and uses an output of the last cycle as a result for subsequent processing.

In a conventional OTFS system, symbols are multiplexed in delay-Doppler domain, and a sparsely connected factor graph is constructed based on an input-output relationship in delay-Doppler domain. Because the symbols in this embodiment of this application are multiplexed in delay-time domain, it is necessary to derive the input-output relationship in delay-time domain. According to the formula (10), the following formulas may be obtained.

$$\boldsymbol{y}_{\mathrm{DT}} = \left( (\boldsymbol{F}_{N_1} \boldsymbol{S} \boldsymbol{F}_{N_2}^{\mathrm{H}})^{\mathrm{T}} \otimes \boldsymbol{I}_M \right)^{\dagger} \boldsymbol{y}_{\mathrm{T}} \qquad (41)$$

$$= \left( (\boldsymbol{F}_{N_1} \boldsymbol{S} \boldsymbol{F}_{N_2}^{\mathrm{H}})^{\mathrm{T}} \otimes \boldsymbol{I}_M \right)^{\dagger} \boldsymbol{H}_{\mathrm{T}} \left( (\boldsymbol{F}_{N_1} \boldsymbol{S} \boldsymbol{F}_{N_2}^{\mathrm{H}})^{\mathrm{T}} \otimes \boldsymbol{I}_M \right) \boldsymbol{x}_{\mathrm{DT}} \qquad (42)$$

$$= \boldsymbol{H}_{\mathrm{DT}} \boldsymbol{x}_{\mathrm{DT}} \qquad (43)$$

Because an equivalent channel matrix $\boldsymbol{H}_{\mathrm{DT}}$ in delay-time domain is sparse, a sparsely connected factor graph is constructed for nonlinear symbol detection. A message is transferred between the variable node and the factor node. It is specified that each factor node $y_{DT}[d]$, where $d = 1,...,MN$, is connected to $W$ variable nodes and transfers messages, where each row and each column in $\boldsymbol{H}_{\mathrm{DT}}$ have $W$ non-zero elements, and $W$ represents the number of non-zero elements in each row or each column in the equivalent channel matrix in delay-time domain. It is specified that a subscript of the $\boldsymbol{x}_{\mathrm{DT}}$ element connected to $y_{\mathrm{DT}}[d]$ is in a set I $(d)$. It is also specified that an element of $y_{\mathrm{DT}}$ connected to $\boldsymbol{x}_{\mathrm{DT}}[c]$ is in a set J $(c)$.

The point-to-point input-output relationship in delay-time domain may be expressed in the following form:

$$y_{\mathrm{DT}}[d] = x_{\mathrm{DT}}[c] H_{\mathrm{DT}}[d,c] + \underbrace{\sum_{e \in \mathrm{I}\,(d), e \neq c} x_{\mathrm{DT}}[e] H_{\mathrm{DT}}[d,e]}_{\varsigma_{d,c}^{(i)}} + z[d] \qquad (44)$$

where $d$ represents a subscript of the factor node, $C$ represents a subscript of a current variable node, $z[d]$ represents white noise included in factor node $d$ in delay-time domain, and $e$ represents a subscript of a variable node connected to factor node $d$, other than the current variable node.

Interference and noise are modeled as Gaussian variables $\zeta$. The factor node transfers the mean and variance of the Gaussian variable to the variable node, which are calculated as follows:

$$\mu_{d,c}^{(i)} = \sum_{e \in \mathrm{I}\,(d), e \neq c} \sum_{j=1}^{Q} p_{e,d}^{(i-1)}(a_j) a_j H_{\mathrm{DT}}[d,e] \qquad (45)$$

14

$$(\sigma_{d,c}^{(i)})^2 = \sum_{e\in I\ (d),e\neq c} \Big( \sum_{j=1}^{Q} p_{e,d}^{(i-1)}(a_j)\,|a_j|^2\,|H_{\text{DT}}[d,e]|^2 - \Big| \sum_{j=1}^{Q} p_{e,d}^{(i-1)}(a_j)a_j H_{\text{DT}}[d,e]\Big|^2 \Big) + \sigma^2 \qquad (46)$$

where $a_j$ represents symbol $j$ in the symbol matrix, and $p_{e,d}^{(i-1)}$ represents a probability mass function of variable node $e$ connected to factor node $j$ in iteration i-1.

It should be noted that the probability mass function is for a discrete random variable and corresponds to symbol probability density of continuous sampling points.

The variable node transfers the probability mass function of the symbol to the factor node, which is updated as follows:

$$p_{c,d}^{(i)}(a_j) = \Delta \cdot \tilde{p}_{c,d}^{(i)}(a_j) + (1-\Delta) \cdot p_{c,d}^{(i-1)}(a_j) \qquad (47)$$

where $\Delta \in (0,1]$ is a damping factor used to control a convergence speed.

$$\tilde{p}_{c,d}^{(i)}(a_j) \propto \prod_{e\in J\ (c),e\neq d} P_r(y_{\text{DT}}[e]\,|\,x_{\text{DT}}[c],H_{\text{DT}}) \qquad (48)$$

$$= \prod_{e\in J\ c,e\neq d} \frac{\xi^{(i)}(e,c,j)}{\displaystyle\sum_{k=1}^{Q} \xi^{(i)}(e,c,k)} \qquad (49)$$

where

$$\xi^{(i)}(e,c,k) = \exp\Big( \frac{-\,|\,y_{\text{DT}}[e] - \mu_{e,c}^{(i)} - H_{\text{DT}}[e,c]a_k\,|^2}{(\sigma_{e,c}^{(i)})^2} \Big) \qquad (50)$$

The convergence speed of the iteration is controlled as follows:

$$\eta^{(i)} = \frac{1}{MN_1} \sum_{c=1}^{MN} \mathrm{I}(\max_{a_j\in A} p_c^{(i)}(a_j) \geq 1-\gamma) \qquad (51)$$

where $\gamma > 0$ is a constant that controls the iteration to stop, and I(.) is an indicator function that takes a value of 1 when a condition described in the brackets is met, or else, takes a value of 0. A normalization operation may be performed on the symbol probability to obtain the following formula:

$$p_c^{(i)}(a_j) = \prod_{e\in J\ (c)} \frac{\xi^{(i)}(e,c,j)}{\displaystyle\sum_{k=1}^{Q} \xi^{(i)}(e,c,k)} \qquad (52)$$

where $p_c^{(i)}(a_j)$ represents a probability that symbol c takes the symbol $a_j$, and Q represents the number of constellation points, that is, the order of modulation.

A final symbol-by-symbol decision proceeds as follows:

$$\hat{x}_{\mathrm{DT}}[c] = \underset{a_j \in A}{\mathrm{argmax}}\, p_c^{(i)}(a_j) \qquad c = 1,\ldots,MN_1 \qquad (53)$$

It may be understood that in this embodiment of this application, the performing delay-time domain symbol detection on the received signal based on the channel correlation parameter includes:

> obtaining the point-to-point input-output relationship in delay-time domain, that is, the formula (44), based on the input-output relationship in delay-time domain, that is, the formula (43);
> calculating, based on Gaussian approximation for the interference item, the information transferred by the factor node in delay-time domain to the variable node in delay-time domain, that is, the formula (45) for the mean of Gaussian variables and the formula (46) for the variance of Gaussian variables;
> calculating, according to the formulas (49) and (52), the information transferred by the variable node to the factor node, that is, the symbol probability mass of the variable node in delay-time domain;
> performing damping (damping) on the symbol probability mass calculated in the current iteration and the result of the previous iteration to improve convergence performance; and
> determining whether the iteration stop condition is met; and if no, continuing the iteration; or if yes, stopping the iteration, and performing symbol detection on the variable node according to the formula (53).

In this embodiment of this application, the symbol detection algorithm based on the MP algorithm in delay-time domain is used. Based on the input-output relationship in delay-time domain, a linear operation relationship between the variable node and the factor node is adjusted, and the MP-based symbol detection algorithm in delay-Doppler domain DD domain is changed to the MP-based symbol detection algorithm in delay-time domain. In this way, equalization time complexity is reduced.

FIG. 6 is a schematic flowchart of signal processing according to an embodiment of this application. First, a pilot pattern is designed at a transmit end, and then a receive end performs channel estimation and symbol detection.

It should be noted that the channel sending method provided in this embodiment of this application may be performed by a signal sending apparatus or a control module for performing the channel sending method in the signal sending apparatus. A signal sending apparatus provided in an embodiment of this application is described by assuming that the channel sending method in this embodiment of this application is performed by the signal sending apparatus.

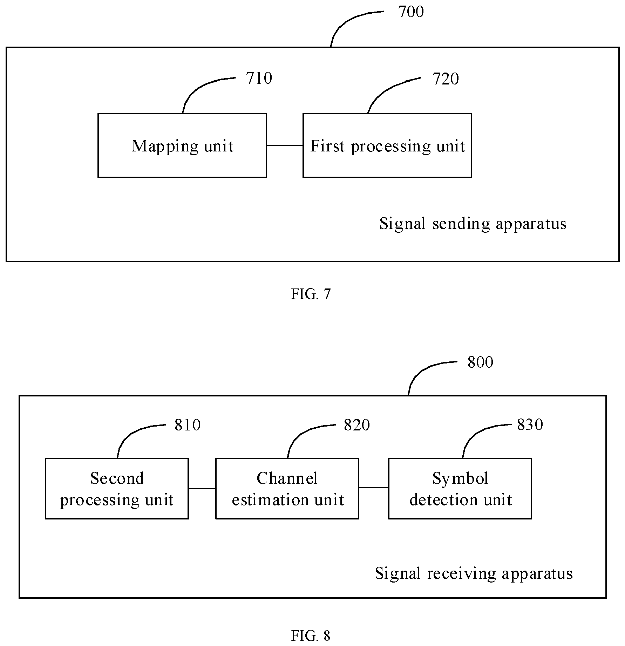

FIG. 7 is a schematic structural diagram of a signal sending apparatus 700 according to an embodiment of this application. As shown in FIG. 7, the apparatus includes a mapping unit 710 and a first processing unit 720.

The mapping unit 710 is configured to map modulation symbols in delay-time domain to obtain a first delay-time domain symbol matrix.

The first processing unit 720 is configured to perform first preset processing on the first delay-time domain symbol matrix to obtain a time domain sampling point, and send the time domain sampling point after pulse shaping.

In this embodiment of this application, the modulation symbols are mapped to delay-time domain to obtain the first delay-time domain symbol matrix, the first preset processing is performed on the first delay-time domain symbol matrix to obtain the time domain sampling point, and the time domain sampling point is sent after pulse shaping. Because single-carrier characteristics are maintained in the sending process, a PAPR is reduced while performance of OTFS in a high-speed movement scenario is ensured.

Optionally, the performing first preset processing on the first delay-time domain symbol matrix by a transmit end includes:

> performing a discrete Fourier transform DFT on the first delay-time domain symbol matrix in a time dimension to obtain a first delay-Doppler domain symbol matrix;
> performing Doppler dimension spread on the first delay-Doppler domain symbol matrix to obtain a second delay-Doppler domain symbol matrix;
> performing an inverse discrete Fourier transform IDFT on the second delay-Doppler domain symbol matrix in a Doppler dimension to obtain a second delay-time domain symbol matrix; and
> performing vectorization processing on the second delay-time domain symbol matrix to obtain the time domain sampling point, and sending the time domain sampling point after pulse shaping.

Optionally, the first processing unit is configured to:

> for the first delay-time domain symbol matrix with $M \times N_1$ dimensions, perform a discrete Fourier transform DFT with a length of $N_1$ row by row to obtain the first delay-Doppler domain symbol matrix with $M \times N_1$ dimensions, where M represents the number of rows in the first delay-time domain symbol matrix, and $N_1$ represents the number

of columns in the first delay-time domain symbol matrix;

map the first delay-Doppler domain symbol matrix with $M \times N_1$ dimensions onto a delay-Doppler domain resource grid with $M \times N_2$ dimensions to obtain the second delay-Doppler domain symbol matrix with $M \times N_2$ dimensions;

for the second delay-Doppler domain symbol matrix with $M \times N_2$ dimensions, perform an inverse discrete Fourier transform IDFT with a length of $N_2$ row by row to obtain the second delay-time domain symbol matrix with $M \times N_2$ dimensions; and

perform vectorization processing on the second delay-time domain symbol matrix with $M \times N_2$ dimensions to obtain the time domain sampling point with a length of $MN_2$, and send the time domain sampling point after pulse shaping, where

$N_2$ is the number of columns in the second delay-Doppler domain symbol matrix, and $N_2$ is an integer greater than or equal to $N_1$.

Optionally, a delay-time domain pilot sequence is embedded in the first delay-time domain symbol matrix, and the apparatus further includes:

a demapping unit, configured to demap the second delay-Doppler domain symbol matrix to the first delay-Doppler domain symbol matrix based on a mapping relationship between $N_1$ and $N_2$; and

a pilot determining unit, configured to determine the delay-time domain pilot sequence based on an inverse discrete Fourier transform relationship between Doppler domain and time domain.

Optionally, an expression of a pilot pattern obtained by mapping the pilot sequence onto the delay-time domain resource grid is:

$$X_{\mathrm{DT}}\left[l,k\right] = \begin{cases} \dfrac{\sum_{k_1=0}^{N_1-1} X_{DDS}\left[l_p,k_1\right]e^{\frac{j2\pi k_1 k}{N_1}}}{N_1}, l = l_p \\ 0, l \in \{[l_p - l_{\max}, l_p + l_{\max}]\setminus l_p\} \\ d[l,k], otherwise \end{cases}$$

where $X_{\mathrm{DT}} \in \mathbb{C}^{M \times N_1}$ is a delay-time domain symbol matrix, $X_{\mathrm{DT}}[l,k]$ represents a symbol in row $l$ and column $k$ in the delay-time domain resource grid, $l_p$ is a row in which the pilot sequence is located, $X_{\mathrm{DDS}}$ is a delay-Doppler domain symbol matrix, $l_{\max}$ is a maximum channel delay, and $d[l,k]$ represents a data symbol.

In this embodiment of this application, based on a correspondence between delay-time domain and delay-Doppler domain, a pilot pattern design scheme in delay-time domain is proposed, so that channel estimation can be performed in delay-Doppler domain. This ensures accuracy of channel estimation in a channel with a decimal Doppler shift, without relying on an integer Doppler assumption, and reduces overheads of the pilot pattern.

The signal sending apparatus in this embodiment of this application may be an apparatus, or an apparatus or an electronic device with an operating system, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The signal sending apparatus provided in this embodiment of this application can implement each process implemented by the method embodiments in FIG. 2 to FIG. 4, with the same technical effect achieved. To avoid repetition, details are not described herein again.

It should be noted that the channel receiving method provided in this embodiment of this application may be performed by a signal receiving apparatus or a control module for performing the channel receiving method in the signal receiving apparatus. A signal receiving apparatus provided in an embodiment of this application is described by assuming that the channel receiving method in this embodiment of this application is performed by the signal receiving apparatus.

FIG. 8 is a schematic structural diagram of a signal receiving apparatus 800 according to an embodiment of this application. The apparatus includes a second processing unit 810, a channel estimation unit 820, and a symbol detection unit 830.

The second processing unit 810 is configured to perform second preset processing on a received time domain signal to obtain a received signal in delay-time domain.

The channel estimation unit 820 is configured to perform channel estimation in delay-Doppler domain based on a delay-time domain pilot sequence to obtain a channel correlation parameter.

The symbol detection unit 830 is configured to perform delay-time domain symbol detection on the received signal based on the channel correlation parameter.

In this embodiment of this application, the second preset processing is performed on the received time domain signal to obtain the received signal in delay-time domain, then channel estimation is performed based on the delay-time domain pilot sequence to obtain the channel correlation parameter, and further delay-time domain symbol detection is performed on the received signal based on the channel correlation parameter. This reduces a PAPR, improves accuracy of channel estimation in a high-speed movement scenario, reduces overheads of channel estimation, and reduces equalization time complexity of a proposed system.

Optionally, the delay-time domain pilot sequence is obtained in one of the following manners:

obtaining the delay-time domain pilot sequence through calculation based on an index value or bitmap information, where the index value or bitmap information is indicated by downlink control information DCI or radio resource control RRC signaling, and the index value or bitmap information represents a location of a delay-Doppler domain single-point pilot pulse in a Doppler dimension of a delay-Doppler resource grid with a size of $M \times N_1$; and obtaining the delay-time domain pilot sequence by querying a pilot index table based on a pilot sequence index, where the pilot sequence index is indicated by DCI or RRC signaling, and the pilot index table is preconfigured in a protocol or indicated by broadcast signaling.

Optionally, the performing second preset processing on a received time domain signal includes:

devectorizing the received time domain signal to obtain a third delay-time domain symbol matrix; performing a discrete Fourier transform DFT on the third delay-time domain symbol matrix to obtain a third delay-Doppler domain symbol matrix; demapping the third delay-Doppler domain symbol matrix to obtain a fourth delay-Doppler domain symbol matrix; and performing an inverse discrete Fourier transform IDFT on the fourth delay-Doppler domain symbol matrix row by row.

Optionally, the second processing unit is configured to:

devectorize the received time domain signal with a length of $MN_2$ to obtain the third delay-time domain symbol matrix with $M \times N_2$ dimensions, where M represents the number of rows in the third delay-time domain symbol matrix, and $N_2$ represents the number of columns in the third delay-time domain symbol matrix; perform a discrete Fourier transform DFT on the third delay-time domain symbol matrix with $M \times N_2$ dimensions to obtain the third delay-Doppler domain symbol matrix with $M \times N_2$ dimensions; demap the third delay-Doppler domain symbol matrix with $M \times N_2$ dimensions to obtain the fourth delay-Doppler domain symbol matrix with $M \times N_1$ dimensions; and perform an inverse discrete Fourier transform IDFT on the fourth delay-Doppler domain symbol matrix with $M \times N_1$ dimensions row by row to obtain a fourth delay-time domain symbol matrix with $M \times N_1$ dimensions, where the fourth delay-time domain symbol matrix with $M \times N_1$ dimensions is the received signal in delay-time domain, where $N_1$ is the number of columns in the fourth delay-Doppler domain symbol matrix, and $N_1$ is an integer less than or equal to $N_2$.

Optionally, the channel estimation unit is configured to:

calculate, in delay-Doppler domain, an impulse response of the delay-time domain pilot sequence in a detection region; perform correlation calculation on the impulse response and a Doppler function to obtain a first correlation function; perform threshold detection on an amplitude of the first correlation function to obtain a threshold detection result; and perform channel parameter estimation based on the threshold detection result to obtain the channel correlation parameter.

This embodiment of this application improves practicality and accuracy of channel estimation in the high-speed movement scenario.

Optionally, the symbol detection unit is configured to:

obtain a point-to-point input-output relationship in delay-time domain based on an input-output relationship in delay-time domain;

calculate, based on Gaussian approximation for an interference item, first information transferred by a factor node in delay-time domain to a variable node in delay-time domain, where the first information includes a mean and variance of Gaussian variables;

calculate second information transferred by the variable node to the factor node, where the second information includes a symbol probability mass of the variable node;

perform damping control on a symbol probability mass calculated in a current iteration and a result of a previous iteration; and

in a case that an iteration stop condition is met, stop the iteration, and perform symbol detection on the variable node; or in a case that an iteration stop condition is not met, continue the iteration.

Optionally, the symbol detection unit is configured to:

obtain a delay-Doppler domain symbol estimation result based on a linear MMSE equalization algorithm, the received signal, and an input-output relationship in delay-Doppler domain; and

devectorize and demap the delay-Doppler domain symbol estimation result to obtain a delay-time domain symbol estimation result.

In this embodiment of this application, a symbol detection algorithm based on an MP algorithm in delay-time domain is used. Based on the input-output relationship in delay-time domain, a linear operation relationship between the variable node and the factor node is adjusted, and an MP-based symbol detection algorithm in delay-Doppler domain DD domain is changed to an MP-based symbol detection algorithm in delay-time domain. In this way, equalization time complexity is reduced.

The signal receiving apparatus in this embodiment of this application may be an apparatus, or an apparatus or an electronic device with an operating system, or may be a component, an integrated circuit, or a chip in a terminal. The apparatus or the electronic device may be a mobile terminal, or may be a nonmobile terminal. For example, the mobile terminal may include but is not limited to the foregoing illustrated type of the terminal 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The signal receiving apparatus provided in this embodiment of this application can implement each process implemented by the method embodiments in FIG. 5 and FIG. 6, with the same technical effect achieved. To avoid repetition, details are not described herein again.

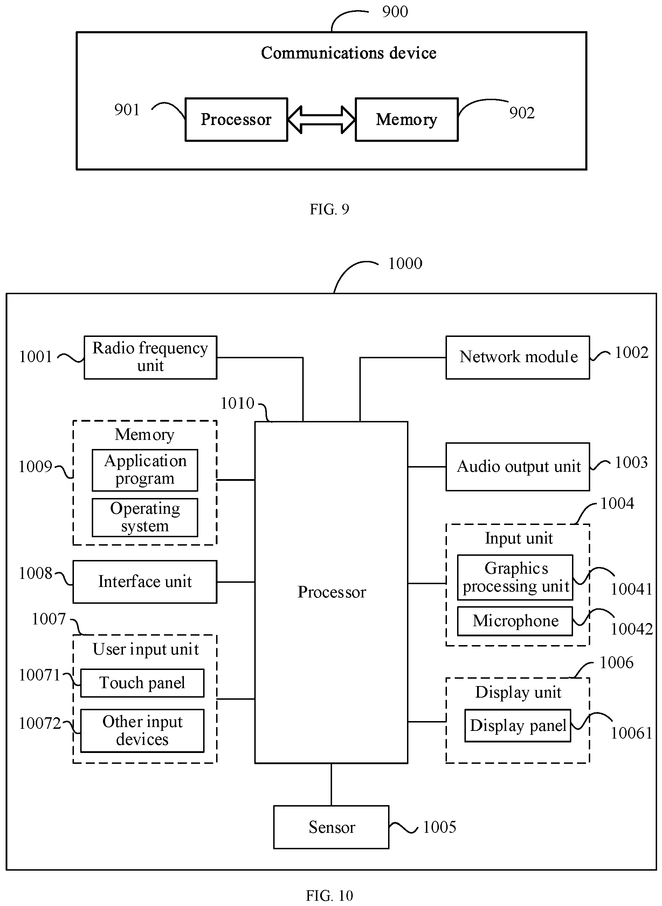

Optionally, as shown in FIG. 9, an embodiment of this application further provides a communications device 900, including a processor 901, a memory 902, and a program or instructions stored in the memory 902 and executable on the processor 901. For example, when the communications device 900 is a terminal, and the program or instructions are executed by the processor 901, each process of the foregoing embodiment of the channel sending method or the channel receiving method is implemented, with the same technical effect achieved. When the communications device 900 is a network-side device, and the program or instructions are executed by the processor 901, each process of the foregoing embodiment of the channel sending method or the channel receiving method is implemented, with the same technical effect achieved. To avoid repetition, details are not described herein again.

An embodiment of this application further provides a terminal. The terminal includes a processor and a communications interface. The processor is configured to: map modulation symbols in delay-time domain to obtain a first delay-time domain symbol matrix; and perform first preset processing on the first delay-time domain symbol matrix to obtain a time domain sampling point, and send the time domain sampling point after pulse shaping. Alternatively, the processor is configured to: perform second preset processing on a received time domain signal to obtain a received signal in delay-time domain; perform channel estimation in delay-Doppler domain based on a delay-time domain pilot sequence to obtain a channel correlation parameter; and perform delay-time domain symbol detection on the received signal based on the channel correlation parameter. The terminal embodiment corresponds to the foregoing method embodiment, and each implementation process and implementation of the foregoing method embodiment can be applied to the terminal embodiment, with the same technical effect achieved. Specifically, FIG. 10 is a schematic diagram of a hardware structure of a terminal for implementing an embodiment of this application.

The terminal 1000 includes but is not limited to at least some components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (for example, a battery) supplying power to all components. The power supply may be logically connected to the processor 1010 through a power management system. In this way, functions such as charge management, discharge management, and power consumption management are implemented by using the power management system. The terminal structure shown in FIG. 10 does not constitute a limitation on the terminal. The terminal may include more or fewer components than those shown in the figure, or some components are combined, or component arrangements are different. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control button or a power button), a trackball, a mouse, and a joystick. Details are not described herein again.

In this embodiment of this application, after receiving downlink data from a network-side device, the radio frequency unit 1001 sends the downlink data to the processor 1010 for processing, and in addition, sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may primarily include a program or instruction storage area and a data storage area. The program or instruction storage area may store an operating system, an application program or instructions (such as an audio play function and an image play function) required by at least one function, and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, the processor 1010 may integrate an application processor and a modem processor. The application processor mainly processes the operating system, a user interface, an application program, or an instruction. The modem processor mainly processes wireless communication. For example, the modem processor is a baseband processor. It may be understood that the modem processor may alternatively not be integrated in the processor 1010.

The processor 1010 is configured to: map modulation symbols in delay-time domain to obtain a first delay-time domain symbol matrix; and

perform first preset processing on the first delay-time domain symbol matrix to obtain a time domain sampling point, and send the time domain sampling point after pulse shaping.

In this embodiment of this application, the modulation symbols are mapped to delay-time domain to obtain the first delay-time domain symbol matrix, the first preset processing is performed on the first delay-time domain symbol matrix to obtain the time domain sampling point, and the time domain sampling point is sent after pulse shaping. Because single-carrier characteristics are maintained in the sending process, a PAPR is reduced while performance of OTFS in a high-speed movement scenario is ensured.

Optionally, the performing first preset processing on the first delay-time domain symbol matrix by a transmit end includes:

performing a discrete Fourier transform DFT on the first delay-time domain symbol matrix in a time dimension to obtain a first delay-Doppler domain symbol matrix;

performing Doppler dimension spread on the first delay-Doppler domain symbol matrix to obtain a second delay-Doppler domain symbol matrix;

performing an inverse discrete Fourier transform IDFT on the second delay-Doppler domain symbol matrix in a Doppler dimension to obtain a second delay-time domain symbol matrix; and

performing vectorization processing on the second delay-time domain symbol matrix.

Optionally, the performing first preset processing on the first delay-time domain symbol matrix to obtain a time domain sampling point, and sending the time domain sampling point after pulse shaping includes:

for the first delay-time domain symbol matrix with $M \times N_1$ dimensions, performing a discrete Fourier transform DFT with a length of $N_1$ row by row to obtain the first delay-Doppler domain symbol matrix with $M \times N_1$ dimensions, where M represents the number of rows in the first delay-time domain symbol matrix, and $N_1$ represents the number of columns in the first delay-time domain symbol matrix;

mapping the first delay-Doppler domain symbol matrix with $M \times N_1$ dimensions onto a delay-Doppler domain resource grid with $M \times N_2$ dimensions to obtain the second delay-Doppler domain symbol matrix with $M \times N_2$ dimensions; for the second delay-Doppler domain symbol matrix with $M \times N_2$ dimensions, performing an inverse discrete Fourier transform IDFT with a length of $N_2$ row by row to obtain the second delay-time domain symbol matrix with $M \times N_2$ dimensions; and

performing vectorization processing on the second delay-time domain symbol matrix with $M \times N_2$ dimensions to obtain the time domain sampling point with a length of $MN_2$, and sending the time domain sampling point after pulse shaping, where

$N_2$ is the number of columns in the second delay-Doppler domain symbol matrix, and $N_2$ is an integer greater than or equal to $N_1$.

Optionally, a delay-time domain pilot sequence is embedded in the first delay-time domain symbol matrix, and the processor 1010 is further configured to:

demap the second delay-Doppler domain symbol matrix to the first delay-Doppler domain symbol matrix based on a mapping relationship between $N_1$ and $N_2$; and
determine the delay-time domain pilot sequence based on an inverse discrete Fourier transform relationship between Doppler domain and time domain.

Optionally, an expression of a pilot pattern obtained by mapping the pilot sequence onto the delay-time domain resource grid is:

$$X_{\mathrm{DT}}\left[l,k\right] = \begin{cases} \dfrac{\sum_{k_1=0}^{N_1-1} X_{DDS}\left[l_p,k_1\right]e^{\frac{j2\pi k_1 k}{N_1}}}{N_1}, l = l_p \\ 0, l \in \{[l_p - l_{\max}, l_p + l_{\max}] \backslash l_p\} \\ d[l,k], otherwise \end{cases}$$

where $X_{\mathrm{DT}} \in \mathbb{C}^{M \times N_1}$ is a delay-time domain symbol matrix, $\boldsymbol{X}_{\mathrm{DT}}[l,k]$ represents a symbol in row $l$ and column $k$ in the delay-time domain resource grid, $l_p$ is a row in which the pilot sequence is located, $\boldsymbol{X}_{\mathrm{DDS}}$ is a delay-Doppler domain symbol matrix, $l_{\max}$ is a maximum channel delay, and $d[l,k]$ represents a data symbol.

In this embodiment of this application, based on a correspondence between delay-time domain and delay-Doppler domain, a pilot pattern design scheme in delay-time domain is proposed, so that channel estimation can be performed in delay-Doppler domain. This ensures accuracy of channel estimation in a channel with a decimal Doppler shift, without relying on an integer Doppler assumption, and reduces overheads of the pilot pattern.

Alternatively, the processor 1010 is configured to:

perform second preset processing on a received time domain signal to obtain a received signal in delay-time domain;
perform channel estimation in delay-Doppler domain based on a delay-time domain pilot sequence to obtain a channel correlation parameter; and
perform delay-time domain symbol detection on the received signal based on the channel correlation parameter.

In this embodiment of this application, the second preset processing is performed on the received time domain signal to obtain the received signal in delay-time domain, then channel estimation is performed based on the delay-time domain pilot sequence to obtain the channel correlation parameter, and further delay-time domain symbol detection is performed on the received signal based on the channel correlation parameter. This reduces a PAPR, improves accuracy of channel estimation in a high-speed movement scenario, reduces overheads of channel estimation, and reduces equalization time complexity of a proposed system.

Optionally, the delay-time domain pilot sequence is obtained in one of the following manners:

obtaining the delay-time domain pilot sequence through calculation based on an index value or bitmap information, where the index value or bitmap information is indicated by downlink control information DCI or radio resource control RRC signaling, and the index value or bitmap information represents a location of a delay-Doppler domain single-point pilot pulse in a Doppler dimension of a delay-Doppler resource grid with a size of $M \times N_1$; and

obtaining the delay-time domain pilot sequence by querying a pilot index table based on a pilot sequence index, where the pilot sequence index is indicated by DCI or RRC signaling, and the pilot index table is preconfigured in a protocol or indicated by broadcast signaling.

Optionally, the performing second preset processing on a received time domain signal includes:

devectorizing the received time domain signal to obtain a third delay-time domain symbol matrix;

performing a discrete Fourier transform DFT on the third delay-time domain symbol matrix to obtain a third delay-Doppler domain symbol matrix;

demapping the third delay-Doppler domain symbol matrix to obtain a fourth delay-Doppler domain symbol matrix; and

performing an inverse discrete Fourier transform IDFT on the fourth delay-Doppler domain symbol matrix row by row.

Optionally, the performing second preset processing on a received time domain signal to obtain a received signal in delay-time domain includes:

devectorizing the received time domain signal with a length of $MN_2$ to obtain the third delay-time domain symbol matrix with $M \times N_2$ dimensions, where M represents the number of rows in the third delay-time domain symbol matrix, and $N_2$ represents the number of columns in the third delay-time domain symbol matrix;

performing a discrete Fourier transform DFT on the third delay-time domain symbol matrix with $M \times N_2$ dimensions to obtain the third delay-Doppler domain symbol matrix with $M \times N_2$ dimensions;

demapping the third delay-Doppler domain symbol matrix with $M \times N_2$ dimensions to obtain the fourth delay-Doppler domain symbol matrix with $M \times N_1$ dimensions; and

performing an inverse discrete Fourier transform IDFT on the fourth delay-Doppler domain symbol matrix with $M \times N_1$ dimensions row by row to obtain a fourth delay-time domain symbol matrix with $M \times N_1$ dimensions, where the fourth delay-time domain symbol matrix with $M \times N_1$ dimensions is the received signal in delay-time domain, where $N_1$ is the number of columns in the fourth delay-Doppler domain symbol matrix, and $N_1$ is an integer less than or equal to $N_2$.

Optionally, the performing channel estimation in delay-Doppler domain based on a delay-time domain pilot sequence to obtain a channel correlation parameter includes:

calculating, in delay-Doppler domain, an impulse response of the delay-time domain pilot sequence in a detection region;

performing correlation calculation on the impulse response and a Doppler function to obtain a first correlation function;

performing threshold detection on an amplitude of the first correlation function to obtain a threshold detection result; and

performing channel parameter estimation based on the threshold detection result to obtain the channel correlation parameter.

Optionally, the performing delay-time domain symbol detection on the received signal based on the channel correlation parameter includes:

obtaining a point-to-point input-output relationship in delay-time domain based on an input-output relationship in delay-time domain;

calculating, based on Gaussian approximation for an interference item, first information transferred by a factor node in delay-time domain to a variable node in delay-time domain, where the first information includes a mean and variance of Gaussian variables;

calculating second information transferred by the variable node to the factor node, where the second information includes a symbol probability mass of the variable node;

performing damping control on a symbol probability mass calculated in a current iteration and a result of a previous iteration; and

in a case that an iteration stop condition is met, stopping the iteration, and performing symbol detection on the variable node; or in a case that an iteration stop condition is not met, continuing the iteration.

Optionally, the performing delay-time domain symbol detection on the received signal based on the channel correlation parameter includes:

obtaining a delay-Doppler domain symbol estimation result based on a linear MMSE equalization algorithm, the received signal, and an input-output relationship in delay-Doppler domain; and

devectorizing and demapping the delay-Doppler domain symbol estimation result to obtain a delay-time domain symbol estimation result.

In this embodiment of this application, the symbol detection algorithm based on the MP algorithm in delay-time domain is used. Based on the input-output relationship in delay-time domain, a linear operation relationship between the variable node and the factor node is adjusted, and the MP-based symbol detection algorithm in delay-Doppler domain DD domain is changed to the MP-based symbol detection algorithm in delay-time domain. In this way, equalization time complexity is reduced.

An embodiment of this application further provides a network-side device. The network-side device includes a processor and a communications interface. The processor is configured to: map modulation symbols in delay-time domain to obtain a first delay-time domain symbol matrix; and perform first preset processing on the first delay-time domain symbol matrix to obtain a time domain sampling point, and send the time domain sampling point after pulse shaping. Alternatively, the processor is configured to: perform second preset processing on a received time domain signal to obtain a received signal in delay-time domain; perform channel estimation in delay-Doppler domain based on a delay-time domain pilot sequence to obtain a channel correlation parameter; and perform delay-time domain symbol detection on the received signal based on the channel correlation parameter. The network-side device embodiment corresponds to the foregoing method embodiment, and each implementation process and implementation of the foregoing method embodiment can be applied to the network-side device embodiment, with the same technical effect achieved.

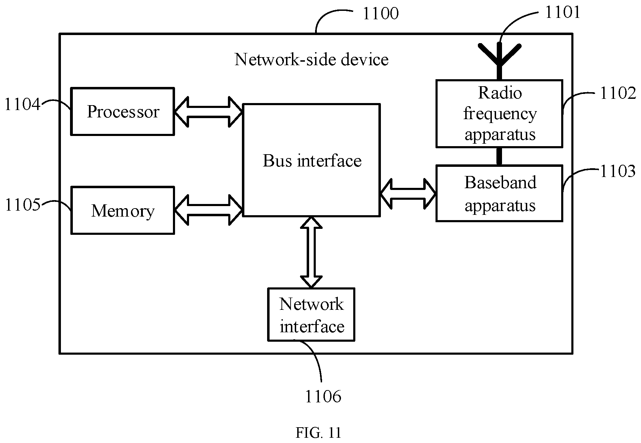

Specifically, an embodiment of this application further provides a network-side device. As shown in FIG. 11, the network device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes to-be-sent information, and sends the information to the radio frequency apparatus 1102; and the radio frequency apparatus 1102 processes the received information and then sends the information out by using the antenna 1101.

A frequency band processing apparatus may be located in the baseband apparatus 1103. The method performed by the network-side device in the foregoing embodiment may be implemented in the baseband apparatus 1103, and the baseband apparatus 1103 includes a processor 1104 and a memory 1105.

The baseband apparatus 1103 may include, for example, at least one baseband processing unit, where a plurality of chips are disposed on the baseband processing unit. As shown in FIG. 11, one of the chips is, for example, the processor 1104, connected to the memory 1105, to invoke a program in the memory 1105 to perform the operation of the network device shown in the foregoing method embodiment.

The baseband apparatus 1103 may further include a network interface 1106, configured to exchange information with the radio frequency apparatus 1102, where the interface is, for example, a common public radio interface (common public radio interface, CPRI for short).

Specifically, the network-side device in this embodiment of the present invention further includes a program or instructions stored in the memory 1105 and executable on the processor 1104. When the processor 1104 invokes the program or instructions in the memory 1105, the method performed by each module shown in FIG. 7 or FIG. 8 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the signal sending method or the signal receiving method is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions to implement each process of the foregoing embodiment of the signal sending method or the signal receiving method, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A signal sending method, comprising:

   mapping, by a transmit end, modulation symbols in delay-time domain to obtain a first delay-time domain symbol matrix; and
   performing, by the transmit end, first preset processing on the first delay-time domain symbol matrix to obtain a time domain sampling point, and sending the time domain sampling point after pulse shaping.

2. The signal sending method according to claim 1, wherein the performing, by the transmit end, first preset processing on the first delay-time domain symbol matrix comprises:

   performing a discrete Fourier transform DFT on the first delay-time domain symbol matrix in a time dimension to obtain a first delay-Doppler domain symbol matrix;
   performing Doppler dimension spread on the first delay-Doppler domain symbol matrix to obtain a second delay-Doppler domain symbol matrix;
   performing an inverse discrete Fourier transform IDFT on the second delay-Doppler domain symbol matrix in a Doppler dimension to obtain a second delay-time domain symbol matrix; and
   performing vectorization processing on the second delay-time domain symbol matrix to obtain the time domain sampling point, and sending the time domain sampling point after pulse shaping.

3. The signal sending method according to claim 2, wherein the performing first preset processing on the first delay-time domain symbol matrix to obtain a time domain sampling point, and sending the time domain sampling point after pulse shaping comprises:

   for the first delay-time domain symbol matrix with $M \times N_1$ dimensions, performing a discrete Fourier transform DFT with a length of $N_1$ row by row to obtain the first delay-Doppler domain symbol matrix with $M \times N_1$ dimensions, wherein M represents the number of rows in the first delay-time domain symbol matrix, and $N_1$ represents the number of columns in the first delay-time domain symbol matrix;

mapping the first delay-Doppler domain symbol matrix with $M \times N_1$ dimensions onto a delay-Doppler domain resource grid with $M \times N_2$ dimensions to obtain the second delay-Doppler domain symbol matrix with $M \times N_2$ dimensions;

for the second delay-Doppler domain symbol matrix with $M \times N_2$ dimensions, performing an inverse discrete Fourier transform IDFT with a length of $N_2$ row by row to obtain the second delay-time domain symbol matrix with $M \times N_2$ dimensions; and

performing vectorization processing on the second delay-time domain symbol matrix with $M \times N_2$ dimensions to obtain the time domain sampling point with a length of $MN_2$, and sending the time domain sampling point after pulse shaping, wherein

$N_2$ is the number of columns in the second delay-Doppler domain symbol matrix, and $N_2$ is an integer greater than or equal to $N_1$.

4. The signal sending method according to claim 3, wherein a delay-time domain pilot sequence is embedded in the first delay-time domain symbol matrix, and the method further comprises:

demapping the second delay-Doppler domain symbol matrix to the first delay-Doppler domain symbol matrix based on a mapping relationship between $N_1$ and $N_2$; and

determining the delay-time domain pilot sequence based on an inverse discrete Fourier transform relationship between Doppler domain and time domain.

5. The signal sending method according to claim 4, wherein an expression of a pilot pattern obtained by mapping the pilot sequence onto the delay-time domain resource grid is:

$$X_{\mathrm{DT}}\left[l,k\right] = \begin{cases} \dfrac{\sum_{k_1=0}^{N_1-1} X_{DDS}\left[l_p,k_1\right] e^{\frac{j2\pi k_1 k}{N_1}}}{N_1}, & l = l_p \\[2ex] 0, l \in \{[l_p - l_{\max}, l_p + l_{\max}] \backslash l_p\} \\[2ex] d[l,k], & otherwise \end{cases}$$

wherein $X_{\mathrm{DT}} \in \mathbb{C}^{M \times N_1}$ is a delay-time domain symbol matrix, $X_{\mathrm{DT}}[l,k]$ represents a symbol in row $l$ and column $k$ in the delay-time domain resource grid, $l_p$ is a row in which the pilot sequence is located, $X_{\mathrm{DDS}}$ is a delay-Doppler domain symbol matrix, $l_{\max}$ is a maximum channel delay, and $d[l,k]$ represents a data symbol.

6. A signal receiving method, comprising:

performing, by a receive end, second preset processing on a received time domain signal to obtain a received signal in delay-time domain;

performing, by the receive end, channel estimation in delay-Doppler domain based on a delay-time domain pilot sequence to obtain a channel correlation parameter; and

performing, by the receive end, delay-time domain symbol detection on the received signal based on the channel correlation parameter.

7. The signal receiving method according to claim 6, wherein the delay-time domain pilot sequence is obtained in one of the following manners:

obtaining the delay-time domain pilot sequence through calculation based on an index value or bitmap information, wherein the index value or bitmap information is indicated by downlink control information DCI or radio resource control RRC signaling, and the index value or bitmap information represents a location of a delay-Doppler domain single-point pilot pulse in a Doppler dimension of a delay-Doppler resource grid with a size of $M \times N_1$; and

obtaining the delay-time domain pilot sequence by querying a pilot index table based on a pilot sequence index, wherein the pilot sequence index is indicated by DCI or RRC signaling, and the pilot index table is preconfigured in a protocol or indicated by broadcast signaling.

8. The signal receiving method according to claim 6, wherein the performing second preset processing on a received time domain signal comprises:

devectorizing the received time domain signal to obtain a third delay-time domain symbol matrix;
performing a discrete Fourier transform DFT on the third delay-time domain symbol matrix to obtain a third delay-Doppler domain symbol matrix;
demapping the third delay-Doppler domain symbol matrix to obtain a fourth delay-Doppler domain symbol matrix; and
performing an inverse discrete Fourier transform IDFT on the fourth delay-Doppler domain symbol matrix row by row.

9. The signal receiving method according to claim 8, wherein the performing second preset processing on a received time domain signal to obtain a received signal in delay-time domain comprises:

devectorizing the received time domain signal with a length of $MN_2$ to obtain the third delay-time domain symbol matrix with $M \times N_2$ dimensions, wherein M represents the number of rows in the third delay-time domain symbol matrix, and $N_2$ represents the number of columns in the third delay-time domain symbol matrix;
performing a discrete Fourier transform DFT on the third delay-time domain symbol matrix with $M \times N_2$ dimensions to obtain the third delay-Doppler domain symbol matrix with $M \times N_2$ dimensions;
demapping the third delay-Doppler domain symbol matrix with $M \times N_2$ dimensions to obtain the fourth delay-Doppler domain symbol matrix with $M \times N_1$ dimensions; and
performing an inverse discrete Fourier transform IDFT on the fourth delay-Doppler domain symbol matrix with $M \times N_1$ dimensions row by row to obtain a fourth delay-time domain symbol matrix with $M \times N_1$ dimensions, wherein the fourth delay-time domain symbol matrix with $M \times N_1$ dimensions is the received signal in delay-time domain, wherein
$N_1$ is the number of columns in the fourth delay-Doppler domain symbol matrix, and $N_1$ is an integer less than or equal to $N_2$.

10. The signal receiving method according to claim 6, wherein the performing channel estimation in delay-Doppler domain based on a delay-time domain pilot sequence to obtain a channel correlation parameter comprises:

calculating, in delay-Doppler domain, an impulse response of the delay-time domain pilot sequence in a detection region;
performing correlation calculation on the impulse response and a Doppler function to obtain a first correlation function;
performing threshold detection on an amplitude of the first correlation function to obtain a threshold detection result; and
performing channel parameter estimation based on the threshold detection result to obtain the channel correlation parameter.

11. The signal receiving method according to claim 6, wherein the performing delay-time domain symbol detection on the received signal based on the channel correlation parameter comprises:

obtaining a point-to-point input-output relationship in delay-time domain based on an input-output relationship in delay-time domain;
calculating, based on Gaussian approximation for an interference item, first information transferred by a factor node in delay-time domain to a variable node in delay-time domain, wherein the first information comprises a mean and variance of Gaussian variables;
calculating second information transferred by the variable node to the factor node, wherein the second information comprises a symbol probability mass of the variable node;
performing damping control on a symbol probability mass calculated in a current iteration and a result of a previous iteration; and
in a case that an iteration stop condition is met, stopping the iteration, and performing symbol detection on the variable node; or in a case that an iteration stop condition is not met, continuing the iteration.

**12.** The signal receiving method according to claim 6, wherein the performing delay-time domain symbol detection on the received signal based on the channel correlation parameter comprises:

obtaining a delay-Doppler domain symbol estimation result based on a linear MMSE equalization algorithm, the received signal, and an input-output relationship in delay-Doppler domain; and
devectorizing and demapping the delay-Doppler domain symbol estimation result to obtain a delay-time domain symbol estimation result.

**13.** A signal sending apparatus, comprising:

a mapping unit, configured to map modulation symbols in delay-time domain to obtain a first delay-time domain symbol matrix; and
a first processing unit, configured to perform first preset processing on the first delay-time domain symbol matrix to obtain a time domain sampling point, and send the time domain sampling point after pulse shaping.

**14.** The signal sending apparatus according to claim 13, wherein the performing first preset processing on the first delay-time domain symbol matrix comprises:

performing a discrete Fourier transform DFT on the first delay-time domain symbol matrix in a time dimension to obtain a first delay-Doppler domain symbol matrix;
performing Doppler dimension spread on the first delay-Doppler domain symbol matrix to obtain a second delay-Doppler domain symbol matrix;
performing an inverse discrete Fourier transform IDFT on the second delay-Doppler domain symbol matrix in a Doppler dimension to obtain a second delay-time domain symbol matrix; and
performing vectorization processing on the second delay-time domain symbol matrix to obtain the time domain sampling point, and sending the time domain sampling point after pulse shaping.

**15.** The signal sending apparatus according to claim 14, wherein the first processing unit is configured to:

for the first delay-time domain symbol matrix with $M \times N_1$ dimensions, perform a discrete Fourier transform DFT with a length of $N_1$ row by row to obtain the first delay-Doppler domain symbol matrix with $M \times N_1$ dimensions, wherein M represents the number of rows in the first delay-time domain symbol matrix, and $N_1$ represents the number of columns in the first delay-time domain symbol matrix;
map the first delay-Doppler domain symbol matrix with $M \times N_1$ dimensions onto a delay-Doppler domain resource grid with $M \times N_2$ dimensions to obtain the second delay-Doppler domain symbol matrix with $M \times N_2$ dimensions;
for the second delay-Doppler domain symbol matrix with $M \times N_2$ dimensions, perform an inverse discrete Fourier transform IDFT with a length of $N_2$ row by row to obtain the second delay-time domain symbol matrix with $M \times N_2$ dimensions; and
perform vectorization processing on the second delay-time domain symbol matrix with $M \times N_2$ dimensions to obtain the time domain sampling point with a length of $MN_2$, and send the time domain sampling point after pulse shaping, wherein
$N_2$ is the number of columns in the second delay-Doppler domain symbol matrix, and $N_2$ is an integer greater than or equal to $N_1$.

**16.** The signal sending apparatus according to claim 15, wherein a delay-time domain pilot sequence is embedded in the first delay-time domain symbol matrix, and the apparatus further comprises:

a demapping unit, configured to demap the second delay-Doppler domain symbol matrix to the first delay-Doppler domain symbol matrix based on a mapping relationship between $N_1$ and $N_2$; and
a pilot determining unit, configured to determine the delay-time domain pilot sequence based on an inverse discrete Fourier transform relationship between Doppler domain and time domain.

**17.** The signal sending apparatus according to claim 16, wherein an expression of a pilot pattern obtained by mapping the pilot sequence onto the delay-time domain resource grid is:

$$X_{\mathrm{DT}}\left[l,k\right]=\begin{cases} \dfrac{\sum_{k_1=0}^{N_1-1} X_{DDS}\left[l_p,k_1\right]e^{\frac{j2\pi k_1 k}{N_1}}}{N_1},\ l=l_p \\[12pt] 0,\ l\in\{[l_p-l_{\max},l_p+l_{\max}]\backslash l_p\} \\[12pt] d[l,k],\ otherwise \end{cases}$$

wherein $X_{\mathrm{DT}}\in\mathbb{C}^{M\times N_1}$ is a delay-time domain symbol matrix, $\boldsymbol{X}_{\mathrm{DT}}[l,k]$ represents a symbol in row $l$ and column $k$ in the delay-time domain resource grid, $l_p$ is a row in which the pilot sequence is located, $\boldsymbol{X}_{\mathrm{DDS}}$ is a delay-Doppler domain symbol matrix, $l_{\max}$ is a maximum channel delay, and $d[l,k]$ represents a data symbol.

18. A signal receiving apparatus, comprising:

a second processing unit, configured to perform second preset processing on a received time domain signal to obtain a received signal in delay-time domain;
a channel estimation unit, configured to perform channel estimation in delay-Doppler domain based on a delay-time domain pilot sequence to obtain a channel correlation parameter; and
a symbol detection unit, configured to perform delay-time domain symbol detection on the received signal based on the channel correlation parameter.

19. The signal receiving apparatus according to claim 18, wherein the delay-time domain pilot sequence is obtained in one of the following manners:

obtaining the delay-time domain pilot sequence through calculation based on an index value or bitmap information, wherein the index value or bitmap information is indicated by downlink control information DCI or radio resource control RRC signaling, and the index value or bitmap information represents a location of a delay-Doppler domain single-point pilot pulse in a Doppler dimension of a delay-Doppler resource grid with a size of $M\times N_1$; and
obtaining the delay-time domain pilot sequence by querying a pilot index table based on a pilot sequence index, wherein the pilot sequence index is indicated by DCI or RRC signaling, and the pilot index table is preconfigured in a protocol or indicated by broadcast signaling.

20. The signal receiving apparatus according to claim 18, wherein the performing second preset processing on a received time domain signal comprises:

devectorizing the received time domain signal to obtain a third delay-time domain symbol matrix;
performing a discrete Fourier transform DFT on the third delay-time domain symbol matrix to obtain a third delay-Doppler domain symbol matrix;
demapping the third delay-Doppler domain symbol matrix to obtain a fourth delay-Doppler domain symbol matrix; and
performing an inverse discrete Fourier transform IDFT on the fourth delay-Doppler domain symbol matrix row by row.

21. The signal receiving apparatus according to claim 20, wherein the second processing unit is configured to:

devectorize the received time domain signal with a length of $MN_2$ to obtain the third delay-time domain symbol matrix with $M\times N_2$ dimensions, wherein M represents the number of rows in the third delay-time domain symbol matrix, and $N_2$ represents the number of columns in the third delay-time domain symbol matrix;
perform a discrete Fourier transform DFT on the third delay-time domain symbol matrix with $M\times N_2$ dimensions to obtain the third delay-Doppler domain symbol matrix with $M\times N_2$ dimensions;
demap the third delay-Doppler domain symbol matrix with $M\times N_2$ dimensions to obtain the fourth delay-Doppler domain symbol matrix with $M \times N_1$ dimensions; and

perform an inverse discrete Fourier transform IDFT on the fourth delay-Doppler domain symbol matrix with $M \times N_1$ dimensions row by row to obtain a fourth delay-time domain symbol matrix with $M \times N_1$ dimensions, wherein the fourth delay-time domain symbol matrix with $M \times N_1$ dimensions is the received signal in delay-time domain, wherein

$N_1$ is the number of columns in the fourth delay-Doppler domain symbol matrix, and $N_1$ is an integer less than or equal to $N_2$.

22. The signal receiving apparatus according to claim 18, wherein the channel estimation unit is configured to:

calculate, in delay-Doppler domain, an impulse response of the delay-time domain pilot sequence in a detection region;
perform correlation calculation on the impulse response and a Doppler function to obtain a first correlation function;
perform threshold detection on an amplitude of the first correlation function to obtain a threshold detection result; and
perform channel parameter estimation based on the threshold detection result to obtain the channel correlation parameter.

23. The signal receiving apparatus according to claim 18, wherein the symbol detection unit is configured to:

obtain a point-to-point input-output relationship in delay-time domain based on an input-output relationship in delay-time domain;
calculate, based on Gaussian approximation for an interference item, first information transferred by a factor node in delay-time domain to a variable node in delay-time domain, wherein the first information comprises a mean and variance of Gaussian variables;
calculate second information transferred by the variable node to the factor node, wherein the second information comprises a symbol probability mass of the variable node;
perform damping control on a symbol probability mass calculated in a current iteration and a result of a previous iteration; and
in a case that an iteration stop condition is met, stop the iteration, and perform symbol detection on the variable node; or in a case that an iteration stop condition is not met, continue the iteration.

24. The signal receiving apparatus according to claim 18, wherein the symbol detection unit is configured to:

obtain a delay-Doppler domain symbol estimation result based on a linear MMSE equalization algorithm, the received signal, and an input-output relationship in delay-Doppler domain; and
devectorize and demap the delay-Doppler domain symbol estimation result to obtain a delay-time domain symbol estimation result.

25. A terminal, comprising a processor, a memory, and a program or instructions stored in the memory and executable on the processor, wherein when the program or instructions are executed by the processor, the steps of the signal sending method according to any one of claims 1 to 5 are implemented, or the steps of the signal receiving method according to any one of claims 6 to 12 are implemented.

26. A network-side device, comprising a processor, a memory, and a program or instructions stored in the memory and executable on the processor, wherein when the program or instructions are executed by the processor, the steps of the signal sending method according to any one of claims 1 to 5 are implemented, or the steps of the signal receiving method according to any one of claims 6 to 12 are implemented.

27. A readable storage medium, wherein the readable storage medium stores a program or instructions, and when the program or instructions are executed by a processor, the steps of the signal sending method according to any one of claims 1 to 5 are implemented, or the steps of the signal receiving method according to any one of claims 6 to 12 are implemented.

FIG. 1

A transmit end maps modulation symbols in delay-time delay-time domain to obtain a first delay-time domain symbol matrix — 200

The transmit end performs first preset processing on the first delay-time domain symbol matrix to obtain a time domain sampling point, and sends the time domain sampling point after pulse shaping — 201

FIG. 2

Delay-time domain (Delay-Time domain)

Time-frequency domain (Time-frequency domain)

| Precoder (DFT) | → | ISFFT | → | Heisenberg transform (Heisenberg Transform) | → | Channel | → | Wigner transform (Wigner Transform) | → | SFFT | → | Decoder (IDFT) |

Delay-Doppler domain (delay-Doppler domain)

FIG. 3

time $N_1$        Doppler $N_1$        Doppler $N_2$ ( > = $N_1$)

M $N_1$-point IDFTs        DEMAPPING

$l_{max}$        $l_{max}$        $l_p$

delay M        delay M        delay M

$k_p$

○: Guard symbol    ★: Pilot    ×: Data symbol    *: Doppler domain to time domain inverse discrete Fourier transform result

FIG. 4

A receive end performs second preset processing on a received time domain signal to obtain a received signal in delay-time delay-time domain ⟋— 500

The receive end performs channel estimation in delay-Doppler domain based on a delay-time domain pilot sequence to obtain a channel correlation parameter ⟋— 501

The receive end performs delay-time domain symbol detection on the received signal based on the channel correlation parameter ⟋— 502

FIG. 5

FIG. 6

700

Mapping unit — 710

First processing unit — 720

Signal sending apparatus

FIG. 7

800

Second processing unit — 810

Channel estimation unit — 820

Symbol detection unit — 830

Signal receiving apparatus

FIG. 8

900

## Communications device

901   Processor ⟺ Memory   902

FIG. 9

1000

1001 — Radio frequency unit

Network module — 1002

1010

Memory
Application program
Operating system

1009

Processor

Audio output unit — 1003

1004

Input unit
Graphics processing unit — 10041
Microphone — 10042

1008 — Interface unit

1007

User input unit
Touch panel
Other input devices

10071

10072

1006

Display unit
Display panel — 10061

Sensor — 1005

FIG. 10

FIG. 11

## INTERNATIONAL SEARCH REPORT

| International application No. |
|---|
| **PCT/CN2022/103596** |

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNPAT, CNKI, WPI, EPODOC, IEEE, ISI: 延时, 延迟, 时间, 时域, 多普勒, 脉冲, 调制, OTFS, PAPR, delay, Doppler, delay, time, pulse, shape, symbol, pilot, estimation, MMSE, QAM, modulation

### C. DOCUMENTS CONSIDERED TO BE RELEVANT

| Category* | Citation of document, with indication, where appropriate, of the relevant passages | Relevant to claim No. |
|---|---|---|
| A | WEI, Zhiqiang et al. "Orthogonal Time-Frequency Space Modulation: A Promising Next-Generation Waveform"<br>*ARXIV*, 03 February 2021 (2021-02-03),<br>    sections II-IV | 1-27 |
| A | SHAN, Y. et al. "Low-Complexity and Low-Overhead Receiver for OTFS via Large-Scale Antenna Array"<br>*IEEE Transactions on Vehicular Technology*, Vol. 70, No. 6, 13 April 2021 (2021-04-13),<br>    entire document | 1-27 |
| A | HOSSAIN, M. N. et al. "DFT-Spread OTFS Communication System with the Reductions of PAPR and Nonlinear Degradation"<br>*Wireless Personal Communications (2020)*, 05 August 2020 (2020-08-05),<br>    entire document | 1-27 |
| A | CHOCKALINGAM, A. et al. "Orthogonal Time Frequency Space (OTFS) Modulation"<br>*Tutorial at VTC2018-Fall*, 27 August 2018 (2018-08-27),<br>    entire document | 1-27 |
| A | US 2017288710 A1 (COHERE TECHNOLOGIES, INC.) 05 October 2017 (2017-10-05)<br>    entire document | 1-27 |

☑ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2022** | **18 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/103596**

**C.     DOCUMENTS CONSIDERED TO BE RELEVANT**

| Category* | Citation of document, with indication, where appropriate, of the relevant passages | Relevant to claim No. |
|---|---|---|
| A | CN 112600783 A (XIDIAN UNIVERSITY) 02 April 2021 (2021-04-02)<br>       entire document | 1-27 |
| A | WO 2021099168 A1 (VOLKSWAGEN AKTIENGESELLSCHAFT) 27 May 2021<br>(2021-05-27)<br>       entire document | 1-27 |

Form PCT/ISA/210 (second sheet) (January 2015)

**INTERNATIONAL SEARCH REPORT**
Information on patent family members

International application No.

**PCT/CN2022/103596**

| Patent document cited in search report | | | Publication date (day/month/year) | Patent family member(s) | | | Publication date (day/month/year) |
|---|---|---|---|---|---|---|---|
| US | 2017288710 | A1 | 05 October 2017 | US | 2019036577 | A1 | 31 January 2019 |
| | | | | US | 2020228170 | A1 | 16 July 2020 |
| | | | | EP | 3437197 | A1 | 06 February 2019 |
| | | | | WO | 2017173461 | A1 | 05 October 2017 |
| | | | | US | 2021367645 | A1 | 25 November 2021 |
| | | | | KR | 20180129897 | A | 05 December 2018 |
| | | | | CN | 109196812 | A | 11 January 2019 |
| CN | 112600783 | A | 02 April 2021 | None | | | |
| WO | 2021099168 | A1 | 27 May 2021 | EP | 3826253 | A1 | 26 May 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021107588635